(19) Europäisches Patentamt
European Patent Office
Office européen des brevets

(11) **EP 4 339 638 B1**

(12) **EUROPEAN PATENT SPECIFICATION**

(45) Date of publication and mention
of the grant of the patent:
**05.08.2026 Bulletin 2026/32**

(21) Application number: **23194680.7**

(22) Date of filing: **31.08.2023**

(51) International Patent Classification (IPC):
*G01S 7/481* (2006.01)       *G01S 17/931* (2020.01)
*G01S 17/86* (2020.01)

(52) Cooperative Patent Classification (CPC):
**G01S 7/4818; G01S 7/4817; G01S 17/86;**
**G01S 17/931;** G01S 13/865; G01S 13/867;
G01S 2013/93271; G01S 2013/93272;
G01S 2013/93274

(54) **FRAME SYNCHRONIZATION METHOD AND APPARATUS FOR LIDAR SYSTEM, AND COMPUTER-READABLE STORAGE MEDIUM**

RAHMENSYNCHRONISATIONSVERFAHREN UND -VORRICHTUNG FÜR LIDAR-SYSTEM UND COMPUTERLESBARES SPEICHERMEDIUM

PROCÉDÉ ET APPAREIL DE SYNCHRONISATION DE TRAME POUR SYSTÈME LIDAR, ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.09.2022 CN 202211106736**

(43) Date of publication of application:
**20.03.2024 Bulletin 2024/12**

(73) Proprietor: **Innovusion (Suzhou) Co., Ltd.**
**Suzhou City, Jiangsu Province 215000 (CN)**

(72) Inventor: **YE, Anxiao**
**Wuhan City 430056 (CN)**

(74) Representative: **Reddie & Grose LLP**
**The White Chapel Building**
**10 Whitechapel High Street**
**London E1 8QS (GB)**

(56) References cited:
**US-A1- 2021 394 781      US-A1- 2021 405 360**
**US-A1- 2022 260 828**

## Description

Technical Field

The present disclosure relates to the field of LiDAR system, and more specifically, to a frame synchronization method and apparatus for a LiDAR system, a computer device, an electronic device, a computer-readable storage medium, and a carrier system.

Background Art

In automated driving and intelligent transportation technologies, a laser radar is becoming an indispensable and important technical component. The automated driving is taken as an example, and the automated driving depends on good on-site perception and detection functions for virtual-real interaction. Currently, automated driving vehicle integration solutions are mostly based on multi-sensor fusion detection and performing complementary or fusion processing on multi-sensor data collected at a same time at an algorithm level.

However, in actual application, movable optical redirection elements in the laser radar, especially a rotating mirror, are not completely synchronized with a frame synchronization signal (such as an external frame synchronization signal), and there may be a drift between the two.

US 2021/0405360 discloses an image capturing system and method. In the image capturing system and method, a light path is changed by controlling a reflection angle of a mirror surface using a rotating mirror so that a single camera obtains consecutive images at various angles or at a wide photographing width.

US 2022/0260828 discloses a frame synchronization method for a scanning vibrating mirror and a lidar. The method includes obtaining current parameters of a reference signal, where the parameters of the reference signal include a reference signal period and a current first phase; obtaining signal parameters of a frame scanning signal along a first rotation axis of the vibrating mirror, where the signal parameters include a frame scanning period and a current second phase; determining a phase difference between the reference signal and the frame scanning signal based on the current parameters of the reference signal and the signal parameters of the frame scanning signal of the current scanning period; and determining a scanning duration of a first scanning stage of the frame scanning signal in a next scanning period based on the phase difference.

US 2021/0394781 discloses a sensor system of an autonomous vehicle which includes at least two lidar units or sensors. The data from the first and second lidar units may be effectively correlated such that a point cloud may be generated that includes point data and annotated velocities.

Summary of the Invention

An objective of the present disclosure is to provide a solution, which is capable of implementing good synchronization between a rotating mirror in a light detection and ranging (LiDAR) system and a frame synchronization signal.

Aspects of the present invention are defined by the independent claims below to which reference should now be made. Optional features are defined by the dependent claims.

Brief Description of the Drawings

The drawings exemplarily show embodiments and form a part of the specification, and are used to illustrate exemplary implementations of the embodiments together with a written description of the specification. The embodiments shown are merely for illustrative purposes and do not limit the scope of the claims. Throughout the accompanying drawings, the same reference numerals denote same elements or similar but not necessarily same elements.

FIG. 1 is a schematic flowchart of a frame synchronization method for a LiDAR system according to an embodiment of the present disclosure;
FIG. 2 is a schematic flowchart of determining whether to control a rotation speed of a rotating mirror to change, dynamically based on a period difference in a frame synchronization method for a LiDAR system according to an embodiment of the present disclosure;
FIG. 3 is a schematic flowchart of determining a rotation speed compensation value for phase synchronization adjustment of a rotating mirror based on a phase difference in a frame synchronization method for a LiDAR system according to an embodiment of the present disclosure;
FIG. 4 is a schematic flowchart of determining a rotation speed compensation value for phase synchronization adjustment of a rotating mirror based on a phase difference in a frame synchronization method for a LiDAR system according to some other embodiments of the present disclosure;
FIG. 5 is a schematic flowchart of a frame synchronization method for a LiDAR system according to some other embodiments of the present disclosure;
FIG. 6 is a schematic block diagram of a frame synchronization apparatus for a LiDAR system according to an embodiment of the present disclosure; and
FIG. 7 is a schematic diagram of a carrier including a centralized laser delivery system and a LiDAR system according to an embodiment of the present disclosure.

Detailed Description of Embodiments

The present disclosure will be further described in detail below with reference to the drawings and embodiments. It can be understood that specific embodiments described herein are used merely to explain a related invention, rather than limit the invention. It should be additionally noted that, for ease of description, only parts related to the related invention are shown in the drawings.

It should be noted that the embodiments in the present disclosure and features in the embodiments can be combined with each other without conflict. If the number of elements is not specifically defined, there may be one or more elements, unless otherwise expressly indicated in the context. In addition, numbers of steps or functional modules used in the present disclosure are used merely to identify the steps or functional modules, rather than limit either a sequence of performing the steps or a connection relationship between the functional modules.

In the present disclosure, unless otherwise stated, the terms "first", "second", etc., used to describe various elements are not intended to limit the positional, temporal or importance relationship of these elements, but rather only to distinguish one element from the other. In some examples, the first element and the second element may refer to the same instance of the element, and in some cases, based on contextual descriptions, the first element and the second element may also refer to different instances.

The terms used in the description of the various examples in the present disclosure are for the purpose of describing particular examples only and are not intended to be limiting. If the number of elements is not specifically defined, there may be one or more elements, unless otherwise expressly indicated in the context. Moreover, the term "and/or" used in the present disclosure encompasses any of and all possible combinations of listed items.

A "LiDAR" refers to a system that uses light to detect a target position and obtain feature quantities such as a target distance, a target speed, and a target attitude. Generally, the LiDAR system may include a light source, a signal deflection system, and an optical detector. The light source is configured to generate an optical pulse. The signal deflection system is used to direct an optical pulse emitted by the LiDAR system to a specific direction, and may direct the emitted optical pulse along different paths, so that the LiDAR system can scan the surrounding environment. The optical pulse emitted by the LiDAR system is reflected or scattered after reaching surrounding objects, some of the reflected or scattered light is returned to the LiDAR system as a return signal, and the signal deflection system may also be configured to redirect a returned optical signal to the optical detector. The optical detector is configured to detect the returned optical signal. For example, the LiDAR system may determine a distance to an object along a path of the emitted optical pulse by using the time and speed of light used to detect the returned optical signal after emitting the optical pulse. It is easy for those skilled in the art to understand that the LiDAR system may also use other technologies to measure the surrounding environment.

The "signal deflection system" is a system of changing the direction of an optical signal. The signal deflection system may include one or more optical redirection elements (for example, a mirror or lens), and the one or more optical redirection elements, for example, by rotation, vibration, or guidance, deflect the optical pulse along an emission path to scan the external surrounding environment. The signal deflection system may further include one or more optical redirection elements (for example, a mirror or lens), and the one or more optical redirection elements, for example, by rotation, vibration, or guidance, deflect the returned optical signal along a receiving path to direct the returned optical signal to the optical detector. The optical redirection element of directing the optical signal along the emission and receiving paths may be a same component (for example, a common component), a separate component (for example, a dedicated component), and/or a combination of the common and separate components. For example, these optical redirection elements may include a galvanometer mirror, a rotating mirror (such as a rotary polygon mirror), or a fixed mirror, to deflect the emitted pulse signal or the received return signal to different directions.

The "rotating mirror" refers to an optical element that deflects the optical pulse or the optical signal through rotational movement of the mirror. In some examples, the rotating mirror is configured to be capable of rotating 360 degrees clockwise or counterclockwise, which is used to, for example, scan one or more signals in a horizontal direction of the LiDAR system.

The "galvanometer mirror" refers to an optical element that deflects the optical pulse or the optical signal through vibrational movement of the mirror. In some examples, the galvanometer mirror is configured to be capable of moving downward or upward by a predetermined angle, which is used to, for example, scan one or more signals in a vertical direction of the LiDAR system.

In a LiDAR system including a plurality of movable optical redirection elements, the plurality of movable optical redirection elements need to have good synchronization to obtain a screen of complete and accurate point cloud data. Thus, in some examples, a frame synchronization signal is provided for synchronizing the movement of the plurality of movable optical redirection elements, and may also be used for synchronizing the LiDAR system with external sensors and/or other external components in terms of time. The frame synchronization signal may be an external synchronization signal, such as a PTP signal or a GPTP signal. However, in actual application, a clock of the movable optical redirection element in the LiDAR system is not exactly the same as a clock of the frame synchronization signal, and there may be a drift between the two. In addition, even if the period of movement and phase of the optical redirection element are calibrated to be consistent with those of the frame synchronization signal, a deviation may occur again during the operation of the LiDAR system.

According to embodiments of the present disclosure, a frame synchronization method for a LiDAR system is proposed, and by using the frame synchronization method, the optical redirection element of the LiDAR system may be well synchronized with the frame synchronization signal. According to the invention, the optical redirection element includes a rotating mirror and a galvanometer mirror.

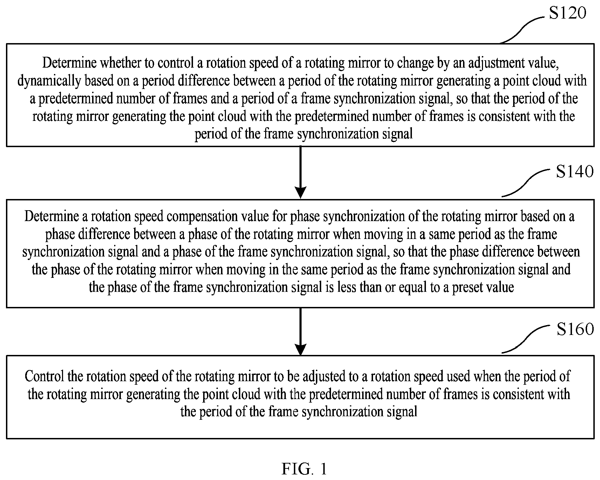

FIG. 1 is a schematic flowchart of a frame synchronization method 100 for a LiDAR system according to some embodiments of the present disclosure. As shown in FIG. 1, the frame synchronization method 100 for the LiDAR system may include:

step S120: determining whether to control a rotation speed of a rotating mirror to change by an adjustment value, dynamically based on a period difference between a period of the rotating mirror generating a point cloud with a predetermined number of frames and a period of a frame synchronization signal, so that the period of the rotating mirror generating the point cloud with the predetermined number of frames is consistent with the period of the frame synchronization signal;

step S140: after the period of the rotating mirror generating the point cloud with the predetermined number of frames is consistent with the period of the frame synchronization signal, determining a rotation speed compensation value for phase synchronization adjustment of the rotating mirror based on a phase difference between a phase of the rotating mirror when moving in a same period as the frame synchronization signal and a phase of the frame synchronization signal, so that the phase difference between the phase of the rotating mirror when moving in the same period as the frame synchronization signal and the phase of the frame synchronization signal is less than or equal to a preset value; and

step S160: after the phase difference between the phase of the rotating mirror when moving in the same period as the frame synchronization signal and the phase of the frame synchronization signal is less than or equal to the preset value, controlling the rotation speed of the rotating mirror to be adjusted to a rotation speed used when the period of the rotating mirror generating the point cloud with the predetermined number of frames is consistent with the period of the frame synchronization signal.

Through the above method, good synchronization between the rotating mirror and the frame synchronization signal may be achieved. In the method according to this embodiment of the present disclosure, if it is determined that the period of the rotating mirror generating the point cloud with the predetermined number of frames is different from the period of the frame synchronization signal, the rotation speed of the rotating mirror is dynamically adjusted until the period of the rotating mirror generating the point cloud with the predetermined number of frames is consistent with that of the frame synchronization signal; after the period of the rotating mirror is adjusted, the phase of the rotating mirror when moving in the same period as the frame synchronization signal is adjusted, thus making the phase of the rotating mirror approximate to the phase of the frame synchronization signal; and after the phase of the rotating mirror when moving in the same period as the frame synchronization signal is adjusted, the rotation speed of the rotating mirror is adjusted to the rotation speed used when the period of the rotating mirror generating the point cloud with the predetermined number of frames is consistent with the period of the frame synchronization signal, that is, a final rotation speed in step S120. Therefore, good synchronization between the period of the rotating mirror generating the point cloud with the predetermined number of frames and the period of the frame synchronization signal and between the phase of the rotating mirror and the phase of the frame synchronization signal may be achieved.

The term "consistent" is not intended to define absolute consistency, and an adjustment error of the rotating mirror and an error generated by a motor may be considered in the present disclosure. That is, within an allowable error range, even if the period of the rotating mirror generating the point cloud with the predetermined number of frames is not absolutely consistent, but is basically consistent or tends to be consistent with the period of the frame synchronization signal, it may be considered that the period of the rotating mirror generating the point cloud with the predetermined number of frames is consistent with the period of the frame synchronization signal in the present disclosure.

In some embodiments, in step S120, a difference between a current period of the rotating mirror in the LiDAR system that generates the point cloud with the predetermined number of frames and the period of the frame synchronization signal is dynamically determined, for example, at a certain time interval (for example, at an interval of 150 milliseconds), and accordingly, it is determined whether to adjust the rotation speed of the rotating mirror. Usually, the LiDAR system performs scans repeatedly to obtain multi-frame point cloud data of the surrounding environment. One frame of point cloud, also known as one screen of point cloud, refers to one frame of complete point cloud data in an area to be measured that can be obtained by the LiDAR system within the field of view. The period of the rotating mirror generating one frame of point cloud is the time when the LiDAR system can obtain one frame of complete point cloud data in the area to be measured through the rotational movement of the rotating mirror. Exemplarily, if the rotating mirror rotates for at least one revolution (for example, 8 revolutions to 15 revolutions), the LiDAR system can obtain one frame of point cloud data, that is, the period of the rotating mirror generating one frame of point cloud is the time when the rotating mirror rotates for at least one revolution (for example, 8 revolutions to 15 revolutions). The period of the frame synchronization signal may be an integer multiple of the period of the rotating mirror generating one frame of point cloud, which is equivalent to a period of the LiDAR system generating multi-frame point cloud due to rotational movement of the rotating mirror. According to the selected frame synchronization signal, a predetermined integer multiple relationship between its period and the period of the rotating mirror generating one frame of point cloud is obtained, and when the LiDAR system is started or operated, step S120 is performed to check whether the predetermined integer multiple relationship between them is met.

As a rotatable mechanical component, the rotating mirror of the LiDAR system has a large inertia, and if the adjustment value is too large, jitter occurs in the point cloud data obtained by the LiDAR system through scanning, thus affecting the quality of the collected data. According to the embodiment of the present disclosure, the rotation speed of the rotating mirror is dynamically adjusted, that is, the rotation speed of the rotating mirror is slightly increased or decreased several times, to dynamically and stably adjust the period of the rotating mirror generating the point cloud with the predetermined number of frames, so that the period of the rotating mirror generating the point cloud with the predetermined number of frames gradually approaches an expected period (that is, the period of the frame synchronization signal). In some embodiments, the adjustment value is a parameter related to the rotating mirror itself. For example, the adjustment value is selected based on at least one of the following factors: a rotating mirror speed, rotating mirror mass, a rotating mirror inertia, and the like. The selected adjustment value can not only make the rotating mirror to be quickly adjusted to an expected value, but also ensure that jitter does not occur in the point cloud data obtained by scanning.

In some embodiments, in step S120, a current rotation speed of the rotating mirror is obtained, and how to adjust the rotation speed of the rotating mirror is determined based on a current difference between the period of the rotating mirror generating the point cloud with the predetermined number of frames and the period of the frame synchronization signal until the period of the rotating mirror generating the point cloud with the predetermined number of frames is consistent with the period of the frame synchronization signal. Thus, based on the rotation speed sampled in real time of the rotating mirror, the difference between the period of the rotating mirror generating the point cloud with the predetermined number of frames and the expected period (that is, the period of the frame synchronization signal) is calculated, and the difference is used as an input that controls the system, to adjust the rotation speed of the rotating mirror, so that the rotation speed of the rotating mirror may be adjusted stably and accurately through such closed-loop control.

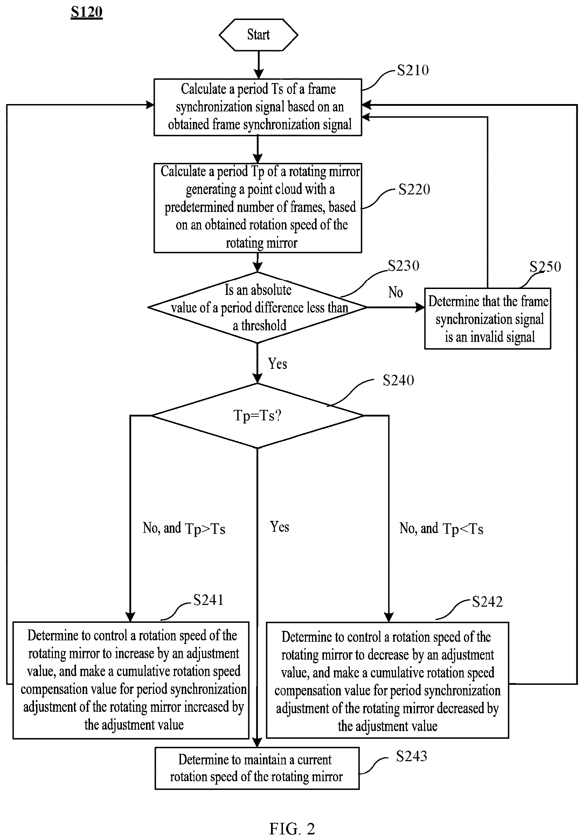

FIG. 2 is a schematic flowchart of determining whether to control a rotation speed of a rotating mirror to change, dynamically based on a period difference in a frame synchronization method 100 for a LiDAR system according to some embodiments of the present disclosure. In some embodiments, as shown in FIG. 2, in step S120, the determining whether to control a rotation speed of a rotating mirror in the LiDAR system to change by an adjustment value, dynamically based on a period difference between a period of the rotating mirror in the LiDAR system that generates a point cloud with a predetermined number of frames and a period of a frame synchronization signal includes:

S210, calculating the period $Ts$ of the frame synchronization signal based on an obtained frame synchronization signal;

S220, calculating the period $Tp$ of the rotating mirror generating the point cloud with the predetermined number of frames based on an obtained rotation speed of the rotating mirror;

S230, calculating the period difference $\Delta T = Tp - Ts$ between the period of the rotating mirror generating the point cloud with the predetermined number of frames and the period of the frame synchronization signal, and determining whether an absolute value of the period difference $\Delta T$ is less than a period difference threshold $\Delta T_{limit}$; and

S240, if the absolute value of the period difference is less than the period difference threshold and not equal to zero, that is, $0 < |Tp - Ts| < \Delta T_{limit}$, determining to control the rotation speed of the rotating mirror to change by the adjustment value, for example, to increase or decrease by the adjustment value.

It should be noted that for steps S210 and S220, the present disclosure does not limit the order in which they are performed and examples in FIG. 2 are only illustrative. The above steps S210 to S240 are repeated, for example, repeating the steps S210 to S240 at a certain time interval until the difference between the period of the rotating mirror generating the point cloud with the predetermined number of frames and the period of the frame synchronization signal is zero. That "the difference is zero" is not intended to define an absolute zero value, and an adjustment error of the movable optical redirection element and an error generated by a motor may be considered in the present disclosure. That is, within an allowable error range, even if the difference between the period of the rotating mirror generating the point cloud with the predetermined number of frames and the period of the frame synchronization signal is not absolutely zero, it may be considered that the period of the rotating mirror generating the point cloud with the predetermined number of frames is consistent with the period of the frame synchronization signal in the present disclosure.

Determining to control the rotation speed of the rotating mirror to change by the adjustment value, in response to the absolute value of the period difference being less than the period difference threshold and not equal to zero includes:

S242, when the period of the rotating mirror generating the point cloud with the predetermined number of frames is less than the period of the frame synchronization signal, that is, $Tp < Ts$, determining to control the rotation speed of the rotating mirror to decrease by the adjustment value, and calculating a cumulative rotation speed compensation value for period synchronization adjustment of the rotating mirror according to the following equation:

$$\Delta V p_i = \Delta V p_{i-1} - \Delta V1 \qquad (1);$$

S241, when the period of the rotating mirror generating the point cloud with the predetermined number of frames is greater than the period of the frame synchronization signal, that is, $Tp > Ts$, determining to control the rotation speed of the rotating mirror to increase by the adjustment value, and calculating a cumulative rotation speed compensation value for period synchronization adjustment of the rotating mirror according to the following equation:

$$\Delta V p_i = \Delta V p_{i-1} + \Delta V1 \qquad (2);$$

in the above equations (1) and (2), where i is a natural number, $\Delta V1$ is an adjustment value, $\Delta V p_i$ is a cumulative rotation speed compensation value from determination for a first time to control the rotation speed of the rotating mirror to change to determination for an $i^{th}$ time to control the rotation speed of the rotating mirror to change, and $\Delta V p_{i-1}$ is a cumulative rotation speed compensation value from the determination for the first time to control the rotation speed of the rotating mirror to change to determination for an $(i-1)^{th}$ time to control the rotation speed of the rotating mirror to change.

Exemplarily, if it is determined that the period of the rotating mirror generating the point cloud with the predetermined number of frames is not equal to the period of the frame synchronization signal, step S120 is triggered. During the first adjustment, based on a current relationship between the period of the rotating mirror in the LiDAR system that generates the point cloud with the predetermined number of frames and the period of the frame synchronization signal, the rotation speed of the rotating mirror is increased or decreased by the adjustment value, and in this case, the cumulative rotation speed compensation value is $\Delta V p_1 = +\Delta V1$ or $\Delta V p_1 = -\Delta V1$. During the second adjustment, based on a current relationship between the period of the rotating mirror in the LiDAR system that generates the point cloud with the predetermined number of frames and the period of the frame synchronization signal, the rotation speed of the rotating mirror is increased or decreased by the adjustment value, and in this case, the cumulative rotation speed compensation value is $\Delta V p_2 = \Delta V p_1 + \Delta V1$ or $\Delta V p_2 = \Delta V p_1 - \Delta V1$. By analogy, during the $i^{th}$ adjustment, the rotation speed of the rotating mirror is increased or decreased by the adjustment value, and in this case, the cumulative rotation speed compensation value is $\Delta V p_i = \Delta V p_{i-1} + \Delta V1$ or $\Delta V p_i = \Delta V p_{i-1} - \Delta V1$. The above steps S210 to S242 are repeated until the period of the rotating mirror generating the point cloud with the predetermined number of frames is consistent with the period of the frame synchronization signal.

In step S120, the determining whether to control a rotation speed of a rotating mirror in the LiDAR system to change by an adjustment value, dynamically based on a period difference between a period of the rotating mirror generating a point cloud with a predetermined number of frames and a period of a frame synchronization signal further includes: S243, when the period of the rotating mirror generating the point cloud with the predetermined number of frames is equal to the period of the frame synchronization signal, that is, the period difference is zero, maintaining a current rotation speed of the rotating mirror, and determining the cumulative rotation speed compensation value for period synchronization adjustment of the rotating mirror. If the period of the rotating mirror generating the point cloud with the predetermined number of frames is consistent with the period of the frame synchronization signal after the $N^{th}$ adjustment, the cumulative rotation speed compensation value for period synchronization adjustment is $\Delta V p = \Delta V p_N$. The rotation speed of the rotating mirror is a sum of an initial rotation speed $V0$ before adjustment and the cumulative rotation speed compensation value $\Delta V p$ for period synchronization adjustment.

In some examples, in step S120, the determining whether to control a rotation speed of a rotating mirror in the LiDAR system to change by an adjustment value, dynamically based on a period difference between a period of the rotating mirror generating a point cloud with a predetermined number of frames and a period of a frame synchronization signal further includes: S250, if the absolute value of the period difference is greater than the period difference threshold, determining that the frame synchronization signal is an invalid signal. If it is determined that the frame synchronization signal is an invalid signal, the process goes back to step S210 to re-obtain the frame synchronization signal, and repeat the above steps S210 to S240 until the difference between the period of the rotating mirror generating the point cloud with the predetermined number of frames and the period of the frame synchronization signal is zero. In some examples, the selection of the period difference threshold is related to the ability of a system (for example, an upper computer such as an SoC) that generates the frame synchronization signal, and the system that generates the frame synchronization signal will not generate a frame synchronization signal with an error exceeding the period difference threshold.

It should be noted that in the present disclosure, the adjustment value $\Delta V1$ may be a determined value, for example, it may be a preset value; and the adjustment value $\Delta V1$ may also be a variable value, and for example, the adjustment value $\Delta V1$ may be adjusted in real time according to a current difference between the period of the rotating mirror and the period of the frame synchronization signal.

In some embodiments, when the LiDAR system is turned on, it is determined whether to implement at least one of the above steps S120 to S160 or S210 to S250, so that the period of the rotating mirror in the LiDAR system that generates the point cloud with the predetermined number of frames is consistent with the period of the frame synchronization signal and the phase of the rotating mirror when moving in the same period as the frame synchronization signal is approximately the same as the phase of the frame synchronization signal. Therefore, the frame synchronization method 100 for the LiDAR system further includes: obtaining a frame synchronization signal in response to a turn-on instruction of the LiDAR system, and calculating the period of the frame synchronization signal based on the obtained frame synchronization signal; and obtaining the rotation speed of the rotating mirror, and calculating the period of the rotating mirror generating the point cloud with the predetermined number of frames based on the obtained rotation speed of the rotating mirror.

During the use of the LiDAR system, the rotating mirror, the galvanometer mirror, and the frame synchronization signal will have a shift, and fluctuation of an intermediate processing signal will also cause a signal shift. In all states of the LiDAR system, the above frame synchronization method 100 for the LiDAR system is always operated. In some embodiments, during the operation of the LiDAR system, the frame synchronization signal and the rotation speed of the rotating mirror are periodically obtained, and it is determined whether the period of the rotating mirror generating the point cloud with the predetermined number of frames or its phase within the same period as the frame synchronization signal is consistent with the period or phase of the frame synchronization signal. If the period of the rotating mirror generating the point cloud with the predetermined number of frames is not consistent with the period of the frame synchronization signal, the above steps S120 to S160 are implemented. If the period of the rotating mirror generating the point cloud with the predetermined number of frames is consistent with the period of the frame synchronization signal, but its phase within the same period as the frame synchronization signal is not consistent with that of the frame synchronization signal, the above steps S140 to S160 are implemented. By using this method, it is ensured that during the operation of the LiDAR system, the period of the rotating mirror in the LiDAR system that generates the point cloud with the predetermined number of frames and its phase within the same period as the frame synchronization signal are consistent or tend to be consistent with the period and phase of the frame synchronization signal.

In some embodiments, the frame synchronization signal is sent periodically.

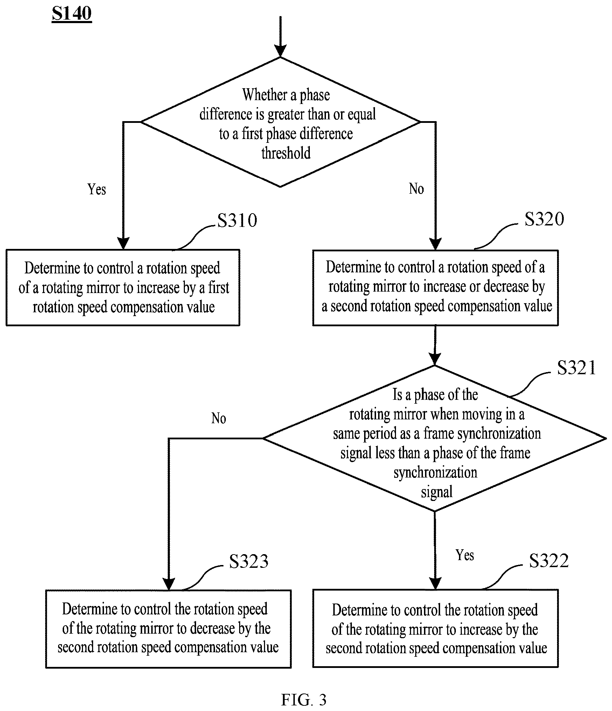

After the period of the rotating mirror generating the point cloud with the predetermined number of frames is consistent with the period of the frame synchronization signal, the phase of the rotating mirror when moving in the same period as the frame synchronization signal is adjusted to make the phase of the rotating mirror when moving in the same period as the frame synchronization signal approximate to the phase of the frame synchronization signal. FIG. 3 is a schematic flowchart of determining a rotation speed compensation value for phase synchronization adjustment of a rotating mirror based on a phase difference in a frame synchronization method 100 for a LiDAR system according to some embodiments of the present disclosure. In some embodiments, in step S140, the determining a rotation speed compensation value for phase synchronization adjustment of the rotating mirror based on a phase difference between a phase of the rotating mirror when moving in a same period as the frame synchronization signal and a phase of the frame synchronization signal includes:

S310, determining to control the rotation speed of the rotating mirror to increase by a first rotation speed compensation value, in response to an absolute value of the phase difference between the phase of the rotating mirror when moving in the same period as the frame synchronization signal and the phase of the frame synchronization signal being greater than or equal to a first phase difference threshold; or
S320, determining to control the rotation speed of the rotating mirror to increase or decrease by a second rotation speed compensation value, in response to an absolute value of the phase difference between the phase of the rotating mirror when moving in the same period as the frame synchronization signal and the phase of the frame synchronization signal being less than a first phase difference threshold, where the second rotation speed compensation value is less than the first rotation speed compensation value.

When the phase difference is relatively large, the original rotation speed of the rotating mirror is increased by a larger rotation speed compensation value, that is, the first rotation speed compensation value, to compensate the phase difference between the rotating mirror and the frame synchronization signal. This large forward addition of the phase may ensure a frame frequency, such that data collected by the rotating mirror in the period of the frame synchronization signal can form a complete point cloud. When the phase difference is relatively small, the original rotation speed of the rotating mirror may be slightly increased or decreased by a smaller rotation speed compensation value, that is, the second rotation speed compensation value, to keep the phases synchronized.

Step S140 further includes: when the phase of the rotating mirror when moving in the same period as the frame synchronization signal lags behind the phase of the frame synchronization signal, the rotation speed compensation value for phase synchronization adjustment of the rotating mirror being a positive value; and when the phase of the rotating mirror when moving in the same period as the frame synchronization signal leads the phase of the frame synchronization signal, the rotation speed compensation value for phase synchronization adjustment of the rotating mirror being a negative value. With reference to the embodiment shown in FIG. 3, step S140 further includes: S321, determining whether the phase of the rotating mirror when moving in the same period as the frame synchronization signal is less than the phase of the frame synchronization signal; and S322, in response to the fact that the phase of the rotating mirror when moving in the same period as the frame synchronization signal is less than the phase of the frame synchronization signal (that is, the phase of the rotating mirror moving in the same period as the frame synchronization signal lags behind the phase of the frame synchronization signal), determining to control the rotation speed of the rotating mirror to increase by the second rotation speed compensation value; or S323, in response to the fact that the phase of the rotating mirror when moving in the same period as the frame synchronization signal is greater than the phase of the frame synchronization signal (that is, the phase of the rotating mirror moving in the same period as the frame synchronization signal leads the phase of the frame synchronization signal), determining to control the rotation speed of the rotating mirror to decrease by the second rotation speed compensation value.

In some embodiments, in step S140, the determining a rotation speed compensation value for phase synchronization adjustment of the rotating mirror based on a phase difference between a phase of the rotating mirror when moving in a same period as the frame synchronization signal and a phase of the frame synchronization signal may further include: adjusting the rotation speed of the rotating mirror by using a predetermined rotation speed compensation value. For example, the rotation speed of the rotating mirror may be increased or decreased by a preset value to make it gradually approximate to the phase of the frame synchronization signal.

In some embodiments, before step S310, it may be firstly determined whether the absolute value of the phase difference between the phase of the rotating mirror when moving in the same period as the frame synchronization signal and the phase of the frame synchronization signal is greater than a second phase difference threshold, and if the absolute value is less than the second phase difference threshold, it is determined that the rotation speed compensation value for phase synchronization adjustment of the rotating mirror is zero, and a current rotation speed of the rotating mirror is maintained. The second phase difference threshold is less than the first phase difference threshold, which represents an allowable phase error.

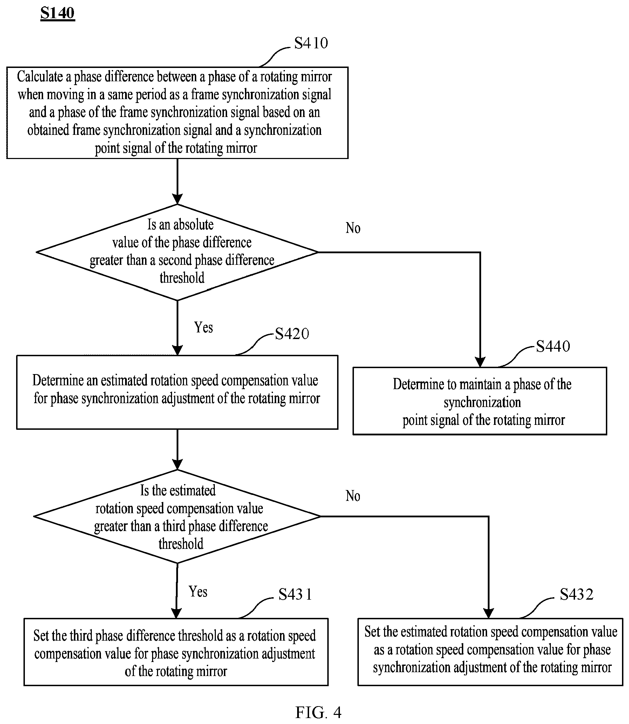

FIG. 4 is a schematic flowchart of determining a rotation speed compensation value for phase synchronization adjustment of a rotating mirror based on a phase difference in a frame synchronization method 100 for a LiDAR system according to some embodiments of the present disclosure. In some embodiments, in step S140, the determining a rotation speed compensation value for phase synchronization adjustment of the rotating mirror based on a phase difference between a phase of the rotating mirror when moving in a same period as the frame synchronization signal and a phase of the frame synchronization signal includes:

S410, calculating the phase difference between the phase of the rotating mirror when moving in the same period as the frame synchronization signal and the phase of the frame synchronization signal based on an obtained frame synchronization signal and a synchronization point signal of the rotating mirror; and S420, in response to the calculated absolute value of the phase difference between the phase of the rotating mirror when moving in the same period as the frame synchronization signal and the phase of the frame synchronization signal being greater than a second phase difference threshold, determining an estimated rotation speed compensation value for phase synchronization adjustment of the rotating mirror according to the following equation:

$$\Delta V\varphi_{estimated} = -\Delta\varphi \times \mathrm{K}p,$$

where $\Delta V\varphi_{estimated}$ is the estimated rotation speed compensation value for phase synchronization adjustment of the rotating mirror, $\Delta\varphi$ is the phase difference between the phase of the synchronization point signal of the rotating mirror and the phase of the frame synchronization signal, and $\mathrm{K}p$ is an adjustment proportional gain. The synchronization point signal of the rotating mirror is a signal when the rotating mirror implements period synchronization with the frame synchronization signal, and when the rotating mirror is a multifaceted prism, the signal of the rotating mirror can be generated by, for example, the following methods: marking a setting face or setting side of the rotating mirror, so that a signal is emitted each time the rotating mirror reaches the setting face or setting side after rotating for one revolution.

Then, the determining the rotation speed compensation value for phase synchronization adjustment of the rotating mirror based on a relationship between an absolute value of the estimated rotation speed compensation value and a third phase difference threshold includes:

S431, when the absolute value of the estimated rotation speed compensation value is greater than the third phase difference threshold, setting the third phase difference threshold as the rotation speed compensation value for phase synchronization adjustment of the rotating mirror; and

S432, when the absolute value of the estimated rotation speed compensation value is less than or equal to the third phase difference threshold, setting the estimated rotation speed compensation value as the rotation speed compensation value for phase synchronization adjustment of the rotating mirror, that is, $\Delta V \varphi = \Delta V \varphi_{estimated} = -\Delta \varphi \times Kp$.

On the basis of the cumulative rotation speed compensation value $\Delta Vp$ for period synchronization adjustment, the rotation speed compensation value $\Delta V \varphi$ for phase synchronization adjustment is superimposed to obtain a final rotation speed compensation value $\Delta V$ of the rotating mirror.

In some embodiments, when the phase of the frame synchronization signal leads the phase of the rotating mirror when moving in the same period as the frame synchronization signal, the rotation speed compensation value for phase synchronization adjustment of the rotating mirror is a positive value; or when the phase of the frame synchronization signal lags behind the phase of the rotating mirror when moving in the same period as the frame synchronization signal, the rotation speed compensation value for phase synchronization adjustment of the rotating mirror is a negative value.

In some embodiments, in step S140, the determining a rotation speed compensation value for phase synchronization adjustment of the rotating mirror based on a phase difference between a phase of the rotating mirror when moving in a same period as the frame synchronization signal and a phase of the frame synchronization signal further includes: obtaining a frame synchronization signal, and calculating the phase of the frame synchronization signal based on the obtained frame synchronization signal; obtaining a synchronization point signal of the rotating mirror, and calculating the phase of the rotating mirror when moving in the same period as the frame synchronization signal based on the obtained synchronization point signal of the rotating mirror; and calculating the phase difference between the phase of the rotating mirror when moving in the same period as the frame synchronization signal and the phase of the frame synchronization signal. Exemplarily, in response to that the period of the rotating mirror generating the point cloud with the predetermined number of frames is equal to the period of the frame synchronization signal, the frame synchronization signal and the synchronization point signal of the rotating mirror are obtained.

In some embodiments, in step S140, the determining a rotation speed compensation value for phase synchronization adjustment of the rotating mirror based on a phase difference between a phase of the rotating mirror when moving in a same period as the frame synchronization signal and a phase of the frame synchronization signal further includes: S440, in response to the calculated absolute value of the phase difference between the phase of the rotating mirror when moving in the same period as the frame synchronization signal and the phase of the frame synchronization signal being less than the second phase difference threshold, determining to maintain the phase of the synchronization point signal of the rotating mirror, and setting the rotation speed compensation value for phase synchronization adjustment of the rotating mirror to zero, where the second phase difference threshold is equal to the preset value described in step S140.

In some embodiments, the first phase difference threshold, the second phase difference threshold, and the third phase difference threshold may be values that are set based on an actual operating phase of the rotating mirror in the LiDAR system and in consideration of an allowable range of other components associated with the rotation of the rotating mirror, where the first phase difference threshold and the third phase difference threshold are greater than the second phase difference threshold.

After the phase difference between the phase of the rotating mirror when moving in the same period as the frame synchronization signal and the phase of the frame synchronization signal is less than or equal to the preset value (such as the second phase difference threshold), the rotation speed of the rotating mirror is controlled to be adjusted to a rotation speed used when the period of the rotating mirror generating the point cloud with the predetermined number of frames is consistent with the period of the frame synchronization signal, that is, the final rotation speed of the rotating mirror in step S120, which is the sum of the initial rotation speed $V0$ before adjustment and the cumulative rotation speed compensation value $\Delta Vp$ for period synchronous adjustment.

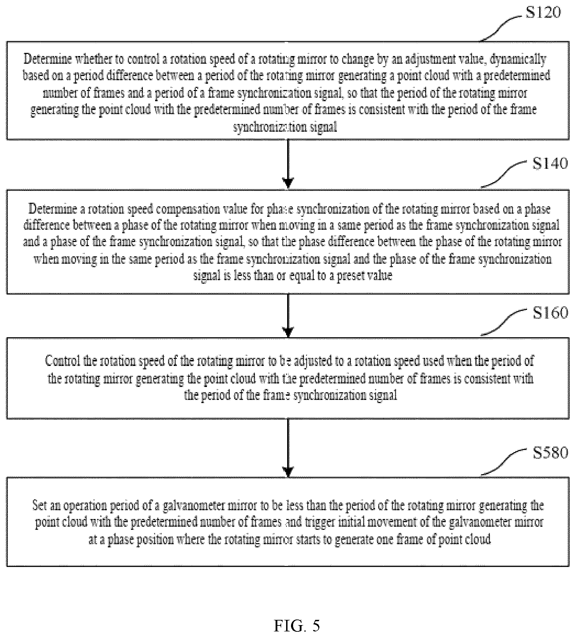

FIG. 5 is a schematic flowchart of a frame synchronization method for a LiDAR system according to some other embodiments of the present disclosure. As shown in FIG. 5, the frame synchronization method 100 for the LiDAR system further includes: S580, based on an adjusted period of the rotating mirror generating the point cloud with the predetermined number of frames and an adjusted phase of the rotating mirror when moving in the same period as the frame synchronization signal, setting an operation period of the galvanometer mirror to be less than the period of the rotating mirror generating one frame of point cloud, and triggering initial movement of the galvanometer mirror at a phase position where the rotating mirror starts to generate one frame of point cloud, so that a movement trajectory of the adjusted galvanometer mirror is synchronized with the adjusted period and phase of the rotating mirror. For example, if the period of the rotating mirror generating one frame of point cloud is the time when the rotating mirror rotates for at least one revolution (for example, 8 revolutions to 15 revolutions), the operation period of the galvanometer mirror is less than the time when the rotating mirror rotates for at least one revolution (for example, 8 revolutions to 15 revolutions). When the rotating mirror is a multifaceted prism, the phase position where the rotating mirror starts to generate one frame of point cloud is, for example, the position reached each time the rotating mirror reaches the setting face or setting side after rotating for one revolution, or the position reached each time it reaches the setting face or setting side after rotating for the at least one revolution (for example, 8 revolutions to 15 revolutions).

When the movement trajectory of the galvanometer mirror swings up and down, the galvanometer mirror swings from a lower limit position to an upper limit position (or swings from the upper limit position to the lower limit position), and the time taken by the galvanometer mirror to swing from the lower limit position to the upper limit position (or swing from the upper limit position to the lower limit position), that is, the operation period of the galvanometer mirror, is set to be less than the period of the rotating mirror generating one frame of point cloud. Therefore, it is necessary to control the movement of the galvanometer mirror every time it is at a limit position, so that its movement trajectory can be consistent with the periodic movement of the rotating mirror. Specifically, each time the galvanometer mirror completes the movement from the upper limit position to the lower limit position or from the lower limit position to the upper limit position, the galvanometer mirror is controlled to wait at the limit position until the phase position where the rotating mirror starts to generate one frame of point cloud, and at his time, the initial movement of the galvanometer mirror is triggered, so that the galvanometer mirror starts to move from the lower limit position or the upper limit position. For example, until a signal representing the movement of the rotating mirror is received, such as an encoded signal generated by an optical rotary encoder of the rotating mirror, a new swing movement is started in phase with the signal.

Through the above method, good synchronization between movement of the galvanometer mirror and the rotating mirror may be implemented. With reference to the method for adjusting the period and phase of the rotating mirror, the frame synchronization method can be implemented to adjust the period and phase of the rotating mirror and galvanometer mirror in the LiDAR system, so that good synchronization may be kept among the rotating mirror movement, the galvanometer mirror movement, and the frame synchronization signal.

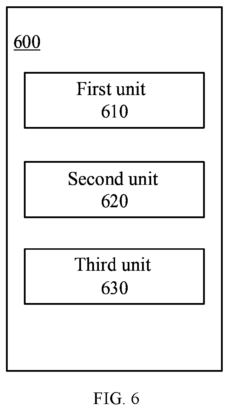

FIG. 6 is a block diagram of a frame synchronization apparatus 600 for a LiDAR system according to an embodiment of the present disclosure. As shown in FIG. 6, the frame synchronization apparatus for the LiDAR system may include a first unit 610, a second unit 620, and a third unit 630. The first unit 610 is configured to determine whether to control a rotation speed of a rotating mirror to change by an adjustment value, dynamically based on a period difference between a period of the rotating mirror generating a point cloud with a predetermined number of frames and a period of a frame synchronization signal, so that the period of the rotating mirror generating the point cloud with the predetermined number of frames is consistent with the period of the frame synchronization signal. The second unit 620 is configured to: after the period of the rotating mirror generating the point cloud with the predetermined number of frames is consistent with the period of the frame synchronization signal, determine a rotation speed compensation value for phase synchronization adjustment of the rotating mirror based on a phase difference between a phase of the rotating mirror when moving in a same period as the frame synchronization signal and a phase of the frame synchronization signal, so that the phase difference between the phase of the rotating mirror when moving in the same period as the frame synchronization signal and the phase of the frame synchronization signal is less than or equal to a preset value. The third unit 630 is configured to: after the phase difference between the phase of the rotating mirror when moving in the same period as the frame synchronization signal and the phase of the frame synchronization signal is less than or equal to the preset value, control the rotation speed of the rotating mirror to be adjusted to a rotation speed used when the period of the rotating mirror generating the point cloud with the predetermined number of frames is consistent with the period of the frame synchronization signal.

In this embodiment, for specific implementations and technical effects of the frame synchronization apparatus 600 for the LiDAR system and its corresponding functional units 610 to 630, reference may be made to the relevant descriptions in the embodiments described in FIG. 1 to FIG. 5, and details are not repeated herein.

According to an embodiment of the present disclosure, the process described above with reference to the flowcharts may be implemented as a computer device, where the computer device may include a processing apparatus (for example, a central processing unit, a graphics processing unit, etc.), which may perform appropriate actions and processing according to a program stored in a read-only memory (ROM) or a program loaded from a storage apparatus to a random access memory (RAM).

According to an embodiment of the present disclosure, the process described above with reference to the flowcharts may be implemented as an electronic device, including a LiDAR system, and the foregoing frame synchronization apparatus for the LiDAR system or the foregoing computer device.

In particular, according to an embodiment of the present disclosure, the process described above with reference to the flowchart of FIG. 1 may be implemented as a computer software program. For example, an embodiment of the present disclosure provides a computer-readable storage medium that stores a computer program, and the computer program contains program code for performing the method 100 shown in FIG. 1. When the computer program is executed by the processing apparatus, the above-mentioned functions defined in the apparatus of the embodiment of the present disclosure are implemented.

It should be noted that a computer-readable medium described in the embodiments of the present disclosure may be a computer-readable signal medium, or a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the embodiments of the present disclosure, the computer-readable storage medium may be any tangible medium containing or storing a program which may be used by or in combination with an instruction execution system, apparatus, or device. In the embodiments of the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

The foregoing computer-readable medium may be contained in the foregoing computer device; and alternatively, the computer-readable medium may exist independently, without being assembled into the computer device. The foregoing computer-readable medium carries one or more programs, and the one or more programs, when executed by the computing device, cause the computer device to perform the following: determining whether to control a rotation speed of a rotating mirror to change by an adjustment value, dynamically based on a period difference between a period of the rotating mirror generating a point cloud with a predetermined number of frames and a period of a frame synchronization signal, so that the period of the rotating mirror generating the point cloud with the predetermined number of frames is consistent with the period of the frame synchronization signal; after the period of the rotating mirror generating the point cloud with the predetermined number of frames is consistent with the period of the frame synchronization signal, determining a rotation speed compensation value for phase synchronization adjustment of the rotating mirror based on a phase difference between a phase of the rotating mirror when moving in a same period as the frame synchronization signal and a phase of the frame synchronization signal, so that the phase difference between the phase of the rotating mirror when moving in the same period as the frame synchronization signal and the phase of the frame synchronization signal is less than or equal to a preset value; and after the phase difference between the phase of the rotating mirror when moving in the same period as the frame synchronization signal and the phase of the frame synchronization signal is less than or equal to the preset value, controlling the rotation speed of the rotating mirror to be adjusted to a rotation speed used when the period of the rotating mirror generating the point cloud with the predetermined number of frames is consistent with the period of the frame synchronization signal.

According to another aspect of the present disclosure, a computer program product is provided, including a computer program, where the computer program, when executed by a processor, causes the processor to perform the frame synchronization method 100 according to any one of the embodiments.

Computer program code for performing operations of the embodiments of the present disclosure can be written in one or more programming languages or a combination thereof, where the programming languages include object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the circumstance involving a remote computer, the remote computer may be connected to a computer of a user over any type of network, including a local area network (LAN) or wide area network (WAN), or may be connected to an external computer (for example, connected over the Internet using an Internet service provider).

According to another aspect of an embodiment of the present disclosure, a carrier system is provided, including: at least one LiDAR system as a first sensor; at least one second sensor; a frame synchronization signal generator configured to generate a frame synchronization signal that causes the at least one LiDAR system and the at least one second sensor to be synchronized; and the foregoing frame synchronization apparatus for the LiDAR system or the foregoing computer device.

The carrier system includes at least a LiDAR system as a sensor, and the LiDAR system synchronizes with other sensors and/or other components in the carrier through a frame synchronization signal. In the carrier system, for example, the LiDAR system may be used as a master control to send the frame synchronization signal, so that it can be synchronized with other sensors in the carrier system, such as a camera, a millimeter-wave radar, or another LiDAR system. In the carrier system, for example, a central control system may also send the frame synchronization signal, so that synchronization is implemented between the sensors (for example, the LiDAR system, the camera, or the millimeter-wave radar) or synchronization is implemented between the sensors and other components in the carrier.

The carrier includes, but is not limited to, a vehicle, an unmanned aerial vehicle, a ship, etc., and a scenario in which the carrier is used includes, but is not limited to, a system with a plurality of sensors, such as a roadside detection device, dock monitoring, intersection monitoring, and a factory.

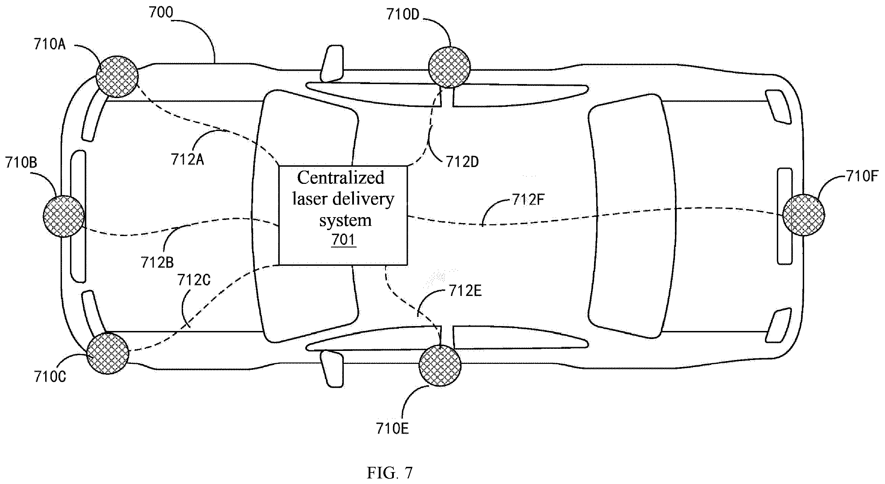

FIG. 7 illustrates an exemplary centralized laser delivery system 701 and a plurality of LiDAR systems arranged or included in a carrier 700. The carrier 700 may further include other sensors, such as a camera or a millimeter-wave radar (not shown in the figure). As shown in FIG. 7, the centralized laser delivery system 701 and the plurality of LiDAR systems 710A to 710F (collectively used as a LiDAR system scanning system 710) are arranged in the carrier 700. In some embodiments, the centralized laser delivery system 701 may be arranged in the carrier 700 at a predetermined position, or integrated with the carrier 700 at a predetermined position. The predetermined position may be, for example, at the center of the carrier, so that the plurality of LiDAR systems 710A to 710F are evenly distributed around the predetermined position of the centralized laser delivery system 701 to receive laser signals. In some examples, the centralized laser delivery system 701 may alternatively be arranged at a convenient position, such as in the neighborhood of a control circuit of the carrier 700. It should be appreciated that the centralized laser delivery system 701 may be arranged in any desired position of the carrier 700.

In some embodiments, depending on the state of the carrier 700, the centralized laser delivery system 701 may provide the laser signals to one or more of the plurality of LiDAR systems 710A to 710F. For example, the carrier 700 may move forward, thus it may be necessary to detect objects located in front of and on both sides of the carrier 700, but it may not be necessary to detect an object located behind the carrier 700. Therefore, the centralized laser delivery system 701 may provide the laser signals to the LiDAR systems 710A to 710E instead of the LiDAR system 710F, and the LiDAR system 710F is configured to detect the object located behind the carrier 700. As another example, the carrier 700 may move backward and it may be necessary to detect the object located behind the carrier 700. Therefore, the centralized laser delivery system 701 may provide the laser signals to the LiDAR system 710F.

In some embodiments, the centralized laser delivery system 701 may provide the laser signals by using one or more channels 712A to 712F (collectively used as a channel 712). The channel 712 may be, for example, a fiber channel. The channel 712 may be flexible, and thus may enable laser signals to be routed or delivered to any LiDAR system of the carrier 700. In some embodiments, the channel 712 may include a single-mode optical fiber and/or a multi-mode optical fiber. The channel 712 may transmit a laser signal with any desired wavelength. The laser signal is a signal that carries information by using a laser beam. The laser signal may include one or more of laser pulses, photons, or beams. The laser signal may be modulated or unmodulated. The laser signal may also have any wavelength and power.

For any one of the plurality of LiDAR systems 710A to 710F, good synchronization between the movement of its rotating mirror and galvanometer mirror and the frame synchronization signal may be implemented by the frame synchronization method for the LiDAR system according to any of the above embodiments.

The flowcharts and block diagrams in the accompanying drawings illustrate the possibly implemented architecture, functions, and operations of the method, apparatus, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by means of software, or may be implemented by means of hardware. The described units may also be arranged in the processor, which for example may be described as: a processor, including a first unit, a second unit, and a third unit. Names of these units do not constitute a limitation on the units themselves under certain circumstances.

**Claims**

1. A frame synchronization method for a LiDAR system, wherein the LiDAR system comprises a rotating mirror and a galvanometer mirror and the frame synchronization method comprises:

   (S120) determining whether to control a rotation speed of the rotating mirror to change by an adjustment value, dynamically based on a period difference between a period of the rotating mirror generating a point cloud with a predetermined number of frames and a period of a frame synchronization signal, so that the period of the rotating mirror generating the point cloud with the predetermined number of frames is consistent with the period of the frame synchronization signal;

   (S140) after the period of the rotating mirror generating the point cloud with the predetermined number of frames is consistent with the period of the frame synchronization signal, determining a rotation speed compensation value for phase synchronization adjustment of the rotating mirror based on a phase difference between a phase of the rotating mirror when moving in a same period as the frame synchronization signal and a phase of the frame synchronization signal, so that the phase difference between the phase of the rotating mirror when moving in the same period as the frame synchronization signal and the phase of the frame synchronization signal is less than or equal to a preset value; and

   (S160) after the phase difference between the phase of the rotating mirror when moving in the same period as the frame synchronization signal and the phase of the frame synchronization signal is less than or equal to the preset value, controlling the rotation speed of the rotating mirror to be adjusted to a rotation speed used when the period of the rotating mirror generating the point cloud with the predetermined number of frames is consistent with the period of the frame synchronization signal

   wherein the frame synchronization method further comprises:
   (S580) based on an adjusted period of the rotating mirror generating the point cloud with the predetermined number of frames and an adjusted phase of the rotating mirror when moving in the same period as the frame synchronization signal, setting an operation period of the galvanometer mirror to be less than a period of the rotating mirror generating one frame of point cloud, and triggering initial movement of the galvanometer mirror at a phase position where the rotating mirror starts to generate one frame of point cloud.

2. The frame synchronization method according to claim 1, wherein the determining whether to control a rotation speed of the rotating mirror to change by an adjustment value, dynamically based on a period difference between a period of the rotating mirror generating a point cloud with a predetermined number of frames and a period of a frame synchronization signal (S120) comprises:

   (S210) calculating the period of the frame synchronization signal based on an obtained frame synchronization signal;
   (S220) calculating the period of the rotating mirror generating the point cloud with the predetermined number of frames based on an obtained rotation speed of the rotating mirror;
   (S230) calculating the period difference between the period of the rotating mirror generating the point cloud with the predetermined number of frames and the period of the frame synchronization signal; and
   (S240) determining to control the rotation speed of the rotating mirror to change by the adjustment value, in response to an absolute value of the period difference being less than a period difference threshold and not equal to zero.

3. The frame synchronization method according to claim 2, wherein the determining to control the rotation speed of the rotating mirror to change by the adjustment value, in response to an absolute value of the period difference being less than a period difference threshold and not equal to zero (S120) comprises:

   (S242) when the period of the rotating mirror generating the point cloud with the predetermined number of frames is less than the period of the frame synchronization signal, determining to control the rotation speed of the rotating mirror to decrease by the adjustment value, and calculating a cumulative rotation speed compensation value for period synchronization adjustment of the rotating mirror according to the following

equation:

$$\Delta Vp_i = \Delta Vp_{i-1} - \Delta V1;$$

or
(S241) when the period of the rotating mirror generating the point cloud with the predetermined number of frames is greater than the period of the frame synchronization signal, determining to control the rotation speed of the rotating mirror to increase by the adjustment value, and calculating a cumulative rotation speed compensation value for period synchronization adjustment of the rotating mirror according to the following equation:

$$\Delta Vp_i = \Delta Vp_{i-1} + \Delta V1,$$

wherein i is a natural number, $\Delta V1$ is an adjustment value, $\Delta Vp_i$ is a cumulative rotation speed compensation value from determination for a first time to control the rotation speed of the rotating mirror to change to determination for an $i^{th}$ time to control the rotation speed of the rotating mirror to change, and $\Delta Vp_{i-1}$ is a cumulative rotation speed compensation value from the determination for the first time to control the rotation speed of the rotating mirror to change to determination for an $(i-1)^{th}$ time to control the rotation speed of the rotating mirror to change.

4. The frame synchronization method according to claim 2 or claim 3, wherein the determining whether to control a rotation speed of the rotating mirror to change by an adjustment value, dynamically based on a period difference between a period of the rotating mirror generating a point cloud with a predetermined number of frames and a period of a frame synchronization signal (S120) further comprises:
(S250) determining that the frame synchronization signal is an invalid signal, in response to the absolute value of the period difference being greater than the period difference threshold.

5. The frame synchronization method according to any of claims 2 to 4, wherein the determining whether to control a rotation speed of the rotating mirror to change by an adjustment value, dynamically based on a period difference between a period of the rotating mirror generating a point cloud with a predetermined number of frames and a period of a frame synchronization signal (S120) further comprises:
(S243) determining to keep the rotation speed of the rotating mirror unchanged, in response to the period difference being equal to zero.

6. The frame synchronization method according to any of claims 1 to 5, wherein the determining a rotation speed compensation value for phase synchronization adjustment of the rotating mirror based on a phase difference between a phase of the rotating mirror when moving in a same period as the frame synchronization signal and a phase of the frame synchronization signal (S140) comprises:
adjusting the rotation speed of the rotating mirror by using a predetermined rotation speed compensation value.

7. The frame synchronization method according to any of claims 1 to 6, wherein the determining a rotation speed compensation value for phase synchronization adjustment of the rotating mirror based on a phase difference between a phase of the rotating mirror when moving in a same period as the frame synchronization signal and a phase of the frame synchronization signal (S140) comprises:

(S310) determining to control the rotation speed of the rotating mirror to increase by a first rotation speed compensation value, in response to an absolute value of the phase difference between the phase of the rotating mirror when moving in the same period as the frame synchronization signal and the phase of the frame synchronization signal being greater than or equal to a first phase difference threshold; or
(S320) determining to control the rotation speed of the rotating mirror to increase or decrease by a second rotation speed compensation value, in response to an absolute value of the phase difference between the phase of the rotating mirror when moving in the same period as the frame synchronization signal and the phase of the frame synchronization signal being less than a first phase difference threshold,
wherein the second rotation speed compensation value is less than the first rotation speed compensation value.

8. The frame synchronization method according to claim 7, wherein

(S322) when the phase of the rotating mirror when moving in the same period as the frame synchronization signal lags behind the phase of the frame synchronization signal, determining to control the rotation speed of the rotating mirror to increase by the second rotation speed compensation value; and
(S323) when the phase of the rotating mirror when moving in the same period as the frame synchronization signal leads the phase of the frame synchronization signal, determining to control the rotation speed of the rotating mirror to decrease by the second rotation speed compensation value.

9. The frame synchronization method according to any of claims 1 to 8, wherein the determining a rotation speed compensation value for phase synchronization adjustment of the rotating mirror based on a phase difference between a phase of the rotating mirror when moving in a same period as the frame synchronization signal and a phase of the frame synchronization signal (S140) comprises:

calculating the phase of the frame synchronization signal based on an obtained frame synchronization signal;
calculating the phase of the rotating mirror when moving in the same period as the frame synchronization signal, based on an obtained synchronization point signal of the rotating mirror;
(S410) calculating the phase difference between the phase of the rotating mirror when moving in the same period as the frame synchronization signal and the phase of the frame synchronization signal; and
(S420) in response to an absolute value of the phase difference between the phase of the rotating mirror when moving in the same period as the frame synchronization signal and the phase of the frame synchronization signal being greater than a second phase difference threshold, determining an estimated rotation speed compensation value for phase synchronization adjustment of the rotating mirror according to the following equation:

$$\Delta V\varphi_{estimated} = -\Delta\varphi \times \mathrm{K}p,$$

wherein $\Delta V\varphi_{estimated}$ is the estimated rotation speed compensation value for phase synchronization adjustment of the rotating mirror, $\Delta\varphi$ is the phase difference between the phase of the rotating mirror when moving in the same period as the frame synchronization signal and the phase of the frame synchronization signal, and $\mathrm{K}p$ is an adjustment proportional gain.

10. The frame synchronization method according to claim 9, wherein the determining a rotation speed compensation value for phase synchronization adjustment of the rotating mirror based on a phase difference between a phase of the rotating mirror when moving in a same period as the frame synchronization signal and a phase of the frame synchronization signal (S140) further comprises:
determining the rotation speed compensation value for phase synchronization adjustment of the rotating mirror based on a relationship between an absolute value of the estimated rotation speed compensation value and a third phase difference threshold, comprising:

(S431) when the absolute value of the estimated rotation speed compensation value is greater than the third phase difference threshold, setting the third phase difference threshold as the rotation speed compensation value for phase synchronization adjustment of the rotating mirror; and
(S432) when the absolute value of the estimated rotation speed compensation value is less than or equal to the third phase difference threshold, setting the estimated rotation speed compensation value as the rotation speed compensation value for phase synchronization adjustment of the rotating mirror.

11. The frame synchronization method according to claim 9 or claim 10, wherein the determining a rotation speed compensation value for phase synchronization adjustment of the rotating mirror based on a phase difference between a phase of the rotating mirror when moving in a same period as the frame synchronization signal and a phase of the frame synchronization signal (S140) further comprises:
(S440) in response to the absolute value of the phase difference between the phase of the rotating mirror when moving in the same period as the frame synchronization signal and the phase of the frame synchronization signal being less than or equal to the second phase difference threshold, setting the rotation speed compensation value for phase synchronization adjustment of the rotating mirror to zero, wherein the second phase difference threshold is equal to the preset value.

12. A frame synchronization apparatus (600) for a LiDAR system, comprising:

a first unit (610) configured to determine whether to control a rotation speed of a rotating mirror to change by an adjustment value, dynamically based on a period difference between a period of the rotating mirror generating a point cloud with a predetermined number of frames and a period of a frame synchronization signal, so that the period of the rotating mirror generating the point cloud with the predetermined number of frames is consistent with the period of the frame synchronization signal;
a second unit (620) configured to: after the period of the rotating mirror generating the point cloud with the predetermined number of frames is consistent with the period of the frame synchronization signal, determine a rotation speed compensation value for phase synchronization adjustment of the rotating mirror based on a phase difference between a phase of the rotating mirror when moving in a same period as the frame synchronization signal and a phase of the frame synchronization signal, so that the phase difference between the phase of the rotating mirror when moving in the same period as the frame synchronization signal and the phase of the frame synchronization signal is less than or equal to a preset value; and

a third unit (630) configured to: after the phase difference between the phase of the rotating mirror when moving in the same period as the frame synchronization signal and the phase of the frame synchronization signal is less than or equal to the preset value, control the rotation speed of the rotating mirror to be adjusted to a rotation speed used when the period of the rotating mirror generating the point cloud with the predetermined number of frames is consistent with the period of the frame synchronization signal

**characterized in that** the third unit is configured to:

based on an adjusted period of the rotating mirror generating the point cloud with the predetermined number of frames and an adjusted phase of the rotating mirror when moving in the same period as the frame synchronization signal, setting an operation period of a galvanometer mirror to be less than a period of the rotating mirror generating one frame of point cloud, and triggering initial movement of the galvanometer mirror at a phase position where the rotating mirror starts to generate one frame of point cloud.

13. A computer device, comprising:

at least one processor; and
at least one memory having a computer program stored thereon,
wherein when executed by the at least one processor, the computer program causes the at least one processor to perform the method according to any of claims 1 to 11.

14. An electronic device, comprising:

a LiDAR system; and
a frame synchronization apparatus (600) according to claim 12 or a computer device according to claim 13.

15. A computer-readable storage medium, having a computer program stored thereon, wherein when executed by a processor, the computer program causes the processor to perform a frame synchronization method according to any one of claims 1 to 11.

16. A carrier system, comprising:

at least one LiDAR system as a first sensor;
at least one second sensor;
a frame synchronization signal generator configured to generate a frame synchronization signal that causes the at least one LiDAR system and the at least one second sensor to be synchronized; and
a frame synchronization apparatus (600) according to claim 12 or a computer device according to claim 13.

## Patentansprüche

1. Rahmensynchronisationsverfahren für ein LiDAR-System, wobei das LiDAR-System einen rotierenden Spiegel und einen Galvanometerspiegel umfasst und das Rahmensynchronisationsverfahren Folgendes umfasst:

(S120) dynamisches Bestimmen, ob eine Winkelgeschwindigkeit des rotierenden Spiegels zum Ändern um einen Anpassungswert zu steuern ist, auf Basis einer Periodendifferenz zwischen einer Periode des Erzeugens einer Punktwolke mit einer vorgegebenen Anzahl von Rahmen durch den rotierenden Spiegel und einer Periode eines Rahmensynchronisationssignals, so dass die Periode des Erzeugens der Punktwolke mit der vorgegebenen Anzahl von Rahmen durch den rotierenden Spiegel mit der Periode des Bildsynchronisationssignals übereinstimmt;

(S140) nachdem die Periode des Erzeugens der Punktwolke mit der vorgegebenen Anzahl von Rahmen durch den rotierenden Spiegel mit der Periode des Rahmensynchronisationssignals übereinstimmt, Bestimmen eines Winkelgeschwindigkeitskompensationswerts für die Phasensynchronisationsanpassung des rotierenden Spiegels auf Basis einer Phasendifferenz zwischen einer Phase des rotierenden Spiegels bei Bewegung in derselben Periode wie das Rahmensynchronisationssignal und einer Phase des Rahmensynchronisationssignals, so dass die Phasendifferenz zwischen der Phase des rotierenden Spiegels bei Bewegung in derselben Periode wie das Rahmensynchronisationssignal und der Phase des Rahmensynchronisationssignals kleiner oder gleich einem voreingestellten Wert ist; und

(S160) nachdem die Phasendifferenz zwischen der Phase des rotierenden Spiegels bei Bewegung in derselben Periode wie das Rahmensynchronisationssignal und der Phase des Rahmensynchronisationssignals kleiner oder gleich dem voreingestellten Wert ist, Steuern der Winkelgeschwindigkeit des rotierenden Spiegels, damit diese angepasst wird auf die Winkelgeschwindigkeit, die verwendet wird, wenn die Periode des Erzeugens der Punktwolke mit der vorgegebenen Anzahl von Rahmen durch den rotierenden Spiegel mit der Periode des Rahmensynchronisationssignals übereinstimmt,

wobei das Rahmensynchronisationsverfahren ferner Folgendes umfasst:

(S580) auf Basis einer angepassten Periode des Erzeugens der Punktwolke mit der vorgegebenen Anzahl von Rahmen durch den rotierenden Spiegel und einer angepassten Phase des rotierenden Spiegels bei Bewegung in derselben Periode wie das Rahmensynchronisationssignal, Einstellen einer Betriebsperiode des Galvanometerspiegels, so dass sie kleiner ist als eine Periode des Erzeugens eines Punktwolkenrahmens durch den rotierenden Spiegel, und Auslösen einer anfänglichen Bewegung des Galvanometerspiegels an einer Phasenposition, an der der rotierende Spiegel beginnt einen Punktwolkenrahmen zu erzeugen.

2. Rahmensynchronisationsverfahren nach Anspruch 1, wobei das dynamische Bestimmen, ob eine Winkelgeschwindigkeit des rotierenden Spiegels um einen Anpassungswert geändert werden soll, auf Basis einer Periodendifferenz zwischen einer Periode des Erzeugens einer Punktwolke mit einer vorgegebenen Anzahl von Rahmen durch den rotierenden Spiegel und einer Periode eines Rahmensynchronisationssignals (S120) Folgendes umfasst:

(S210) Berechnen der Periode des Rahmensynchronisationssignals auf Basis eines erhaltenen Rahmensynchronisationssignals;
(S220) Berechnen der Periode des Erzeugens der Punktwolke mit der vorgegebenen Anzahl von Rahmen durch den rotierenden Spiegel auf Basis einer erhaltenen Winkelgeschwindigkeit des rotierenden Spiegels;
(S230) Berechnen der Periodendifferenz zwischen der Periode des Erzeugens der Punktwolke mit der vorgegebenen Anzahl von Rahmen durch den rotierenden Spiegel und der Periode des Rahmensynchronisationssignals; und
(S240) Bestimmen, dass die Winkelgeschwindigkeit des rotierenden Spiegels zum Ändern um den Anpassungswert zu steuern ist, als Reaktion darauf, dass ein Absolutwert der Periodendifferenz kleiner ist als ein Periodendifferenzschwellenwert und nicht gleich null ist.

3. Rahmensynchronisationsverfahren nach Anspruch 2, wobei das Bestimmen, dass die Winkelgeschwindigkeit des rotierenden Spiegels zum Ändern um den Anpassungswert zu steuern ist, als Reaktion darauf, dass ein Absolutwert der Periodendifferenz kleiner ist als ein Periodendifferenzschwellenwert und nicht gleich null ist (S120), Folgendes umfasst:

(S242) wenn die Periode des Erzeugens der Punktwolke mit der vorgegebenen Anzahl von Rahmen durch den rotierenden Spiegel kleiner ist als die Periode des Rahmensynchronisationssignals, Bestimmen, dass die Winkelgeschwindigkeit des rotierenden Spiegels zum Verringern um den Anpassungswert zu steuern ist, und Berechnen einer kumulativen Winkelgeschwindigkeitskompensationswerts für die Periodensynchronisationsanpassung des rotierenden Spiegels gemäß der folgenden Gleichung;

$$\Delta V \rho_i = \Delta V \rho_{i-1} - \Delta V1; \text{ oder,}$$

(S241) wenn die Periode des Erzeugens der Punktwolke mit der vorgegebenen Anzahl von Rahmen durch den rotierenden Spiegel größer ist als die Periode des Rahmensynchronisationssignals, Bestimmen, dass die Winkelgeschwindigkeit des rotierenden Spiegels zum Erhöhen um den Anpassungswert zu steuern ist, und Berechnen eines kumulativen Winkelgeschwindigkeitskompensationswerts für die Periodensynchronisationsanpassung des rotierenden Spiegels gemäß der folgenden Gleichung;

$$\Delta V \rho_i = \Delta V \rho_{i-1} + \Delta V1,$$

wobei i eine natürliche Zahl ist, $\Delta V1$ ein Anpassungswert ist, $\Delta V \rho_i$ ein kumulativer Winkelgeschwindigkeitskompensationswert von einer erstmaligen Bestimmung, dass die Winkelgeschwindigkeit des rotierenden Spiegels zum Ändern zu steuern ist, zur Bestimmung zum i-ten Mal, dass die Winkelgeschwindigkeit des rotierenden Spiegels zum Ändern zu steuern ist, ist und $\Delta V \rho_{i-1}$ ein kumulativer Winkelgeschwindigkeitskompensationswert von der erstmaligen Bestimmung, dass die Winkelgeschwindigkeit des rotierenden Spiegels zum Ändern zu steuern ist, zur Bestimmung zum (i-1)-ten Mal, dass die Winkelgeschwindigkeit des rotierenden Spiegels zum Ändern zu steuern ist.

4. Rahmensynchronisationsverfahren nach Anspruch 2 oder Anspruch 3, wobei das dynamische Bestimmen, ob eine Winkelgeschwindigkeit des rotierenden Spiegels zum Ändern um einen Anpassungswert zu steuern ist, auf Basis einer Periodendifferenz zwischen einer Periode des Erzeugens einer Punktwolke mit einer vorgegebenen Anzahl von Rahmen durch den rotierenden Spiegel und einer Periode eines Rahmensynchronisationssignals (S120) ferner Folgendes umfasst:

(S250) Bestimmen, dass das Rahmensynchronisationssignal ein ungültiges Signal ist, als Reaktion darauf, dass der Absolutwert der Periodendifferenz größer ist als der Periodendifferenzschwellenwert.

5. Rahmensynchronisationsverfahren nach einem der Ansprüche 2 bis 4, wobei das dynamische Bestimmen, ob eine Winkelgeschwindigkeit des rotierenden Spiegels zum Ändern um einen Anpassungswert zu steuern ist, auf Basis einer Periodendifferenz zwischen einer Periode des Erzeugens einer Punktwolke mit einer vorgegebenen Anzahl von Rahmen durch den rotierenden Spiegel und einer Periode eines Rahmensynchronisationssignals (S120) ferner Folgendes umfasst:

(S243) Bestimmen, dass die Winkelgeschwindigkeit des rotierenden Spiegels unverändert zu halten ist, als Reaktion darauf, dass die Periodendifferenz gleich null ist.

6. Rahmensynchronisationsverfahren nach einem der Ansprüche 1 bis 5, wobei das Bestimmen eines Winkelgeschwindigkeitskompensationswerts zur Phasensynchronisationsanpassung des rotierenden Spiegels auf Basis einer Phasendifferenz zwischen einer Phase des rotierenden Spiegels bei Bewegung in derselben Periode wie das Rahmensynchronisationssignal und einer Phase des Rahmensynchronisationssignals (S140) Folgendes umfasst:

Anpassen der Winkelgeschwindigkeit des rotierenden Spiegels unter Einsatz eines vorgegebenen Winkelgeschwindigkeitskompensationswerts.

7. Rahmensynchronisationsverfahren nach einem der Ansprüche 1 bis 6, wobei das Bestimmen eines Winkelgeschwindigkeitskompensationswerts zur Phasensynchronisationsanpassung des rotierenden Spiegels auf Basis einer Phasendifferenz zwischen einer Phase des rotierenden Spiegels bei Bewegung in derselben Periode wie das Rahmensynchronisationssignal und einer Phase des Rahmensynchronisationssignals (S140) Folgendes umfasst:

(S310) Bestimmen, dass die Winkelgeschwindigkeit des rotierenden Spiegels zum Erhöhen um einen ersten Winkelgeschwindigkeitskompensationswert zu steuern ist, als Reaktion darauf, dass ein Absolutwert der Phasendifferenz zwischen der Phase des rotierenden Spiegels bei Bewegung in derselben Periode wie das Rahmensynchronisationssignal und der Phase des Rahmensynchronisationssignals größer oder gleich einem ersten Phasendifferenzschwellenwert ist; oder

(S320) Bestimmen, dass die Winkelgeschwindigkeit des rotierenden Spiegels zum Erhöhen oder Verringern um einen zweiten Winkelgeschwindigkeitskompensationswert zu steuern ist, als Reaktion darauf, dass ein Absolutwert der Phasendifferenz zwischen der Phase des rotierenden Spiegels bei Bewegung in derselben Periode wie das Rahmensynchronisationssignal und der Phase des Rahmensynchronisationssignals kleiner ist als ein erster Phasendifferenzschwellenwert;

wobei der zweite Winkelgeschwindigkeitskompensationswert kleiner ist als der erste Winkelgeschwindigkeitskompensationswert.

8. Rahmensynchronisationsverfahren nach Anspruch 7, **gekennzeichnet durch**,

(S322) wenn die Phase des rotierenden Spiegels bei Bewegung in derselben Periode wie das Rahmensynchronisationssignal hinter der Phase des Rahmensynchronisationssignals zurückbleibt, Bestimmen, dass die Winkelgeschwindigkeit des rotierenden Spiegels zum Erhöhen um den zweiten Winkelgeschwindigkeitskompensationswert zu steuern ist; und,

(S323) wenn die Phase des rotierenden Spiegels bei Bewegung in derselben Periode wie das Rahmensynchronisationssignal der Phase des Rahmensynchronisationssignals voraus ist, Bestimmen, dass die Winkelgeschwindigkeit des rotierenden Spiegels zum Verringern um den zweiten Winkelgeschwindigkeitskompensationswert zu steuern ist.

9. Rahmensynchronisationsverfahren nach einem der Ansprüche 1 bis 8, wobei das Bestimmen eines Winkelgeschwindigkeitskompensationswerts zur Phasensynchronisationsanpassung des rotierenden Spiegels auf Basis einer Phasendifferenz zwischen einer Phase des rotierenden Spiegels bei Bewegung in derselben Periode wie das Rahmensynchronisationssignal und einer Phase des Rahmensynchronisationssignals (S140) Folgendes umfasst:

Berechnen der Phase des Rahmensynchronisationssignals auf Basis eines ermittelten Rahmensynchronisationssignals;

Berechnen der Phase des rotierenden Spiegels bei Bewegung in derselben Periode wie das Rahmensynchronisationssignal auf Basis eines ermittelten Synchronisationspunktsignals des rotierenden Spiegels;

(S410) Berechnen der Phasendifferenz zwischen der Phase des rotierenden Spiegels bei Bewegung in derselben Periode wie das Rahmensynchronisationssignal und der Phase des Rahmensynchronisationssignals; und,

(S420) als Reaktion darauf, dass ein Absolutwert der Phasendifferenz zwischen der Phase des rotierenden Spiegels bei Bewegung in derselben Periode wie das Rahmensynchronisationssignal und der Phase des Rahmensynchronisationssignals größer ist als eine zweite Phasendifferenzschwelle, Bestimmen eines geschätzten Winkelgeschwindigkeitskompensationswerts zur Phasensynchronisationsanpassung des rotierenden Spiegels gemäß der folgenden Gleichung:

$$\Delta V\varphi_{gesch\ddot{a}tzt} = \Delta\varphi \times K\rho,$$

wobei $\Delta V\varphi_{gesch\ddot{a}tzt}$ der geschätzte Winkelgeschwindigkeitskompensationswert zur Phasensynchronisationsanpassung des rotierenden Spiegels ist, $\Delta\varphi$ die Phasendifferenz zwischen der Phase des rotierenden Spiegels bei Bewegung in derselben Periode wie das Rahmensynchronisationssignal und der Phase des Rahmensynchronisationssignals ist und $K\rho$ ein Proportionalbeiwert ist.

10. Rahmensynchronisationsverfahren nach Anspruch 9, wobei das Bestimmen eines Winkelgeschwindigkeitskompensationswerts zur Phasensynchronisationsanpassung des rotierenden Spiegels auf Basis einer Phasendifferenz zwischen einer Phase des rotierenden Spiegels bei Bewegung in derselben Periode wie das Rahmensynchronisationssignal und einer Phase des Rahmensynchronisationssignals (S140) Folgendes umfasst:

Bestimmen des Winkelgeschwindigkeitskompensationswerts zur Phasensynchronisationsanpassung des rotierenden Spiegels auf Basis einer Beziehung zwischen einem Absolutwert des geschätzten Winkelgeschwindigkeitskompensationswerts und einem dritten Phasendifferenzschwellenwert, umfassend:

(S431) wenn der Absolutwert des geschätzten Winkelgeschwindigkeitskompensationswerts größer ist als der dritte Phasendifferenzschwellenwert, Einstellen des dritten Phasendifferenzschwellenwerts als den Winkelgeschwindigkeitskompensationswert zur Phasensynchronisationsanpassung des rotierenden Spiegels; und,

(S432) wenn der Absolutwert des geschätzten Winkelgeschwindigkeitskompensationswerts kleiner oder gleich dem dritten Phasendifferenzschwellenwert ist, Einstellen des geschätzten Winkelgeschwindigkeitskompensationswerts als den Winkelgeschwindigkeitskompensationswert zur Phasensynchronisationsanpassung des rotierenden Spiegels.

11. Rahmensynchronisationsverfahren nach Anspruch 9 oder Anspruch 10, wobei das Bestimmen eines Winkelgeschwindigkeitskompensationswerts zur Phasensynchronisationsanpassung des rotierenden Spiegels auf Basis einer Phasendifferenz zwischen einer Phase des rotierenden Spiegels bei Bewegung in derselben Periode wie das Rahmensynchronisationssignal und einer Phase des Rahmensynchronisationssignals (S140) ferner Folgendes umfasst:

(S440) als Reaktion darauf, dass der Absolutwert der Phasendifferenz zwischen der Phase des rotierenden Spiegels bei Bewegung in derselben Periode wie das Rahmensynchronisationssignal und der Phase des Rahmensynchronisationssignals kleiner oder gleich dem zweiten Phasendifferenzschwellenwert ist, Einstellen des Winkelgeschwindigkeitskompensationswerts zur Phasensynchronisationsanpassung des rotierenden Spiegels auf null, wobei der zweite Phasendifferenzschwellenwert gleich dem voreingestellten Wert ist.

12. Rahmensynchronisationsvorrichtung (600) für ein LiDAR-System, umfassend:

eine erste Einheit (610), die konfiguriert ist zum: dynamischen Bestimmen, ob eine Winkelgeschwindigkeit eines rotierenden Spiegels zum Ändern um einen Anpassungswert zu steuern ist, auf Basis einer Periodendifferenz zwischen einer Periode des Erzeugens einer Punktwolke mit einer vorgegebenen Anzahl von Rahmen durch den rotierenden Spiegel und einer Periode eines Rahmensynchronisationssignals, so dass die Periode des Erzeugens der Punktwolke mit der vorgegebenen Anzahl von Rahmen durch den rotierenden Spiegel mit der Periode des Bildsynchronisationssignals übereinstimmt;

eine zweite Einheit (620), die konfiguriert ist zum: nachdem die Periode des Erzeugens der Punktwolke mit der vorgegebenen Anzahl von Rahmen durch den rotierenden Spiegel mit der Periode des Rahmensynchronisationssignals übereinstimmt, Bestimmen eines Winkelgeschwindigkeitskompensationswerts für die Phasensynchronisationsanpassung des rotierenden Spiegels auf Basis einer Phasendifferenz zwischen einer Phase des rotierenden Spiegels bei Bewegung in derselben Periode wie das Rahmensynchronisationssignal und einer Phase des Rahmensynchronisationssignals, so dass die Phasendifferenz zwischen der Phase des rotierenden Spiegels bei Bewegung in derselben Periode wie das Rahmensynchronisationssignal und der Phase des Rahmensynchronisationssignals kleiner oder gleich einem voreingestellten Wert ist; und

eine dritte Einheit (630), die konfiguriert ist zum: nachdem die Phasendifferenz zwischen der Phase des rotierenden Spiegels bei Bewegung in derselben Periode wie das Rahmensynchronisationssignal und der Phase des Rahmensynchronisationssignals kleiner oder gleich dem voreingestellten Wert ist, Steuern der Winkelgeschwindigkeit des rotierenden Spiegels, damit diese angepasst wird auf eine Winkelgeschwindigkeit, die verwendet wird, wenn die Periode des Erzeugens der Punktwolke mit der vorgegebenen Anzahl von Rahmen durch den rotierenden Spiegel mit der Periode des Rahmensynchronisationssignals übereinstimmt, **dadurch gekennzeichnet, dass** die dritte Einheit konfiguriert ist zum:

auf Basis einer angepassten Periode des Erzeugens der Punktwolke mit der vorgegebenen Anzahl von Rahmen durch den rotierenden Spiegel und einer angepassten Phase des rotierenden Spiegels bei Bewegung in derselben Periode wie das Rahmensynchronisationssignal, Einstellen einer Betriebsperiode eines Galvanometerspiegels, so dass sie kleiner ist als eine Periode des Erzeugens eines Punktwolkenrahmens durch den rotierenden Spiegel, and Auslösen einer anfänglichen Bewegung des Galvanometerspiegels an einer Phasenposition, an der der rotierende Spiegel beginnt einen Punktwolkenrahmen zu erzeugen.

13. Computervorrichtung, umfassend:

mindestens einen Prozessor; und
mindestens einen Speicher mit einem darauf gespeicherten Computerprogramm,
wobei das Computerprogramm bei Ausführung durch den mindestens einen Prozessor den mindestens einen Prozessor zum Durchführen des Verfahrens nach einem der Ansprüche 1 bis 11 veranlasst.

14. Elektronische Vorrichtung, umfassend:

ein LiDAR-System; und
eine Rahmensynchronisationsvorrichtung (600) nach Anspruch 12 oder eine Computervorrichtung nach Anspruch 13.

15. Computerlesbares Speichermedium mit einem darauf gespeicherten Computerprogramm, wobei das Computerprogramm bei Ausführung durch einen Prozessor den Prozessor zum Durchführen eines Rahmensynchronisationsverfahrens nach einem der Ansprüche 1 bis 11 veranlasst.

16. Trägersystem, umfassend:

mindestens ein LiDAR-System als ersten Sensor;
mindestens einen zweiten Sensor;
einen Rahmensynchronisationssignalgenerator, der zum Erzeugen eines Rahmensynchronisationssignals konfiguriert ist, das veranlasst, dass das mindestens eine LiDAR-System und der mindestens eine zweite Sensor synchronisiert werden; und
eine Rahmensynchronisationsvorrichtung (600) nach Anspruch 12 oder eine Computervorrichtung nach Anspruch 13.

**Revendications**

1. Procédé de synchronisation de trame pour un système LiDAR, dans lequel le système LiDAR comprend un miroir rotatif et un miroir galvanométrique, et le procédé de synchronisation de trame comprend :

(S120) la détermination qu'il convient ou non de commander une vitesse de rotation du miroir rotatif pour la changer par une valeur d'ajustement, basée dynamiquement sur une différence de période entre une période du miroir rotatif générant un nuage de points avec un nombre prédéterminé de trames et une période d'un signal de synchronisation de trame, de telle sorte que la période du miroir rotatif générant le nuage de points avec le nombre prédéterminé de trames soit cohérente avec la période du signal de synchronisation de trame ;
(S140) après que la période du miroir rotatif générant le nuage de points avec le nombre prédéterminé de trames est cohérente avec la période du signal de synchronisation de trame, la détermination d'une valeur de compensation de vitesse de rotation pour un ajustement de synchronisation de phase du miroir rotatif sur la base d'une différence de phase entre une phase du miroir rotatif lorsqu'il se déplace dans la même période que le signal de synchronisation de trame et une phase du signal de synchronisation de trame, de telle sorte que la différence de phase entre la phase du miroir rotatif lorsqu'il se déplace dans la même période que le signal de synchronisation de trame et la phase du signal de synchronisation de trame soit inférieure ou égale à une valeur prédéfinie ; et (S160) après que la différence de phase entre la phase du miroir rotatif lorsqu'il se déplace dans la même période que le signal de synchronisation de trame et la phase du signal de synchronisation de trame est inférieure ou égale à la valeur prédéfinie, la commande de la vitesse de rotation du miroir rotatif pour l'ajuster à une vitesse de rotation utilisée lorsque la période du miroir rotatif générant le nuage de points avec le nombre prédéterminé de trames est cohérente avec la période du signal de synchronisation de trame

le procédé de synchronisation de trame comprenant en outre :

(S580) sur la base d'une période ajustée du miroir rotatif générant le nuage de points avec le nombre prédéterminé de trames et d'une phase ajustée du miroir rotatif lorsqu'il se déplace dans la même période que le signal de synchronisation de trame, le réglage d'une période de fonctionnement du miroir galvanométrique à une durée inférieure à une période du miroir rotatif générant une trame de nuage de points, et le déclenchement d'un mouvement initial du miroir galvanométrique à une position de phase où le miroir rotatif commence à générer une trame de nuage de points.

2. Procédé de synchronisation de trame selon la revendication 1, dans lequel la détermination qu'il convient ou non de commander une vitesse de rotation du miroir rotatif pour la changer par une valeur d'ajustement, basée dynamiquement sur une différence de période entre une période du miroir rotatif générant un nuage de points avec un nombre prédéterminé de trames et une période d'un signal de synchronisation de trame (S120), comprend :

(S210) le calcul de la période du signal de synchronisation de trame sur la base d'un signal de synchronisation de trame obtenu ;
(S220) le calcul de la période du miroir rotatif générant le nuage de points avec le nombre prédéterminé de trames sur la base d'une vitesse de rotation obtenue du miroir rotatif ;
(S230) le calcul de la différence de période entre la période du miroir rotatif générant le nuage de points avec le nombre prédéterminé de trames et la période du signal de synchronisation de trame ; et
(S240) la détermination de commander la vitesse de rotation du miroir rotatif pour la changer par la valeur d'ajustement, lorsqu'une valeur absolue de la différence de période est inférieure à un seuil de différence de période et non égale à zéro.

3. Procédé de synchronisation de trame selon la revendication 2, dans lequel la détermination de commander la vitesse de rotation du miroir rotatif pour la changer par la valeur d'ajustement, lorsqu'une valeur absolue de la différence de période est inférieure à un seuil de différence de période et non égale à zéro (S120), comprend :

(S242) lorsque la période du miroir rotatif générant le nuage de points avec le nombre prédéterminé de trames est inférieure à la période du signal de synchronisation de trame, la détermination de commander la vitesse de rotation du miroir rotatif pour la diminuer par la valeur d'ajustement, et le calcul d'une valeur de compensation de vitesse de rotation cumulative pour un ajustement de synchronisation de période du miroir rotatif selon l'équation suivante :

$$\Delta V_{p_i} - \Delta V_{p_{i-1}} - \Delta V1;$$

ou
(S241) lorsque la période du miroir rotatif générant le nuage de points avec le nombre prédéterminé de trames est supérieure à la période du signal de synchronisation de trame, la détermination de commander la vitesse de rotation du miroir rotatif pour l'augmenter par la valeur d'ajustement, et le calcul d'une valeur de compensation de vitesse de rotation cumulative pour un ajustement de synchronisation de période du miroir rotatif selon l'équation suivante :

$$\Delta V_{p_i} = \Delta V_{p_{i-1}} + \Delta V1,$$

dans lequel i est un nombre naturel, $\Delta V1$ est une valeur d'ajustement, $\Delta V_{pi}$ est une valeur de compensation de vitesse de rotation cumulative issue d'une détermination une première fois de commander la vitesse de rotation du miroir rotatif pour la changer à une détermination une $i^{ème}$ fois de commander la vitesse de rotation du miroir rotatif pour la changer, et $\Delta V_{pi-1}$ est une valeur de compensation de vitesse de rotation cumulative issue de la détermination la première fois de commander la vitesse de rotation du miroir rotatif pour la changer à une détermination une $(i-1)^{ème}$ fois de commander la vitesse de rotation du miroir rotatif pour la changer.

4. Procédé de synchronisation de trame selon la revendication 2 ou la revendication 3, dans lequel la détermination qu'il convient ou non de commander une vitesse de rotation du miroir rotatif pour la changer par une valeur d'ajustement, basée dynamiquement sur une différence de période entre une période du miroir rotatif générant un nuage de points avec un nombre prédéterminé de trames et une période d'un signal de synchronisation de trame (S120) comprend en outre :

(S250) la détermination que le signal de synchronisation de trame est un signal invalide, en réponse au fait que la valeur absolue de la différence de période est supérieure au seuil de différence de période.

**5.** Procédé de synchronisation de trame selon l'une quelconque des revendications 2 à 4, dans lequel la détermination qu'il convient ou non de commander une vitesse de rotation du miroir rotatif pour la changer par une valeur d'ajustement, basée dynamiquement sur une différence de période entre une période du miroir rotatif générant un nuage de points avec un nombre prédéterminé de trames et une période d'un signal de synchronisation de trame (S120) comprend en outre :

(S243) la détermination de maintenir inchangée la vitesse de rotation du miroir rotatif, en réponse au fait que la différence de période est égale à zéro.

**6.** Procédé de synchronisation de trame selon l'une quelconque des revendications 1 à 5, dans lequel la détermination d'une valeur de compensation de vitesse de rotation pour un ajustement de synchronisation de phase du miroir rotatif basée sur une différence de phase entre une phase du miroir rotatif lorsqu'il se déplace dans la même période que le signal de synchronisation de trame et une phase du signal de synchronisation de trame (S140) comprend :

l'ajustement de la vitesse de rotation du miroir rotatif à l'aide d'une valeur de compensation de vitesse de rotation prédéterminée.

**7.** Procédé de synchronisation de trame selon l'une quelconque des revendications 1 à 6, dans lequel la détermination d'une valeur de compensation de vitesse de rotation pour un ajustement de synchronisation de phase du miroir rotatif basée sur une différence de phase entre une phase du miroir rotatif lorsqu'il se déplace dans la même période que le signal de synchronisation de trame et une phase du signal de synchronisation de trame (S140) comprend :

(S310) la détermination de commander la vitesse de rotation du miroir rotatif pour l'augmenter par une première valeur de compensation de vitesse de rotation, en réponse au fait qu'une valeur absolue de la différence de phase entre la phase du miroir rotatif lorsqu'il se déplace dans la même période que le signal de synchronisation de trame et la phase du signal de synchronisation de trame est supérieure ou égale à un premier seuil de différence de phase ; ou
(S320) la détermination de commander la vitesse de rotation du miroir rotatif pour l'augmenter ou la réduire par une seconde valeur de compensation de vitesse de rotation, en réponse au fait qu'une valeur absolue de différence de phase entre la phase du miroir rotatif lorsqu'il se déplace dans la même période que le signal de synchronisation de trame et la phase du signal de synchronisation de trame est inférieure à un premier seuil de différence de phase, dans lequel la seconde valeur de compensation de vitesse de rotation est inférieure à la première valeur de compensation de vitesse de rotation.

**8.** Procédé de synchronisation de trame selon la revendication 7, dans lequel

(S322) lorsque la phase du miroir rotatif lorsqu'il se déplace dans la même période que le signal de synchronisation de trame est en retard par rapport à la phase du signal de synchronisation de trame, la détermination de commander la vitesse de rotation du miroir rotatif pour l'augmenter par la seconde valeur de compensation de vitesse de rotation; et
(S323) lorsque la phase du miroir rotatif lorsqu'il se déplace dans la même période que le signal de synchronisation de trame devance la phase du signal de synchronisation de trame, la détermination de commander la vitesse de rotation du miroir rotatif pour la diminuer par la seconde valeur de compensation de vitesse de rotation.

**9.** Procédé de synchronisation de trame selon l'une quelconque 1 à 8, dans lequel la détermination d'une valeur de compensation de vitesse de rotation pour un ajustement de synchronisation de phase du miroir rotatif basée sur une différence de phase entre une phase du miroir rotatif lorsqu'il se déplace dans la même période que le signal de synchronisation de trame et une phase du signal de synchronisation de trame (S140) comprend :

le calcul de la phase du signal de synchronisation de trame sur la base d'un signal de synchronisation de trame obtenu ;
le calcul de la phase du miroir rotatif lorsqu'il se déplace dans la même période que le signal de synchronisation de trame, sur la base d'un signal de point de synchronisation obtenu du miroir rotatif ;
(S410) le calcul de la différence de phase entre la phase du miroir rotatif lorsqu'il se déplace dans la même période que le signal de synchronisation de trame et la phase du signal de synchronisation de trame ; et
(S420) lorsqu'une valeur absolue de la différence de phase entre la phase du miroir rotatif lorsqu'il se déplace dans la même période que le signal de synchronisation de trame et la phase du signal de synchronisation de trame est supérieure à un second seuil de différence de phase, la détermination d'une valeur de compensation de vitesse de rotation estimée pour un ajustement de synchronisation de phase du miroir rotatif selon l'équation suivante :

$$\Delta V\varphi_{estimée} = \Delta\varphi \text{ x } Kp,$$

dans lequel $\Delta V\varphi_{estimée}$ est la valeur de compensation de vitesse de rotation estimée pour un ajustement de synchronisation de phase du miroir rotatif, $\Delta\varphi$ est la différence de phase entre la phase du miroir rotatif lorsqu'il se déplace dans la même période que le signal de synchronisation de trame et la phase du signal de synchronisation de trame, et Kp est un gain proportionnel d'ajustement.

10. Procédé de synchronisation de trame selon la revendication 9, dans lequel la détermination d'une valeur de compensation de vitesse de rotation pour un ajustement de synchronisation de phase du miroir rotatif basée sur une différence de phase entre une phase du miroir rotatif lorsqu'il se déplace dans la même période que le signal de synchronisation de trame et une phase du signal de synchronisation de trame (S140) comprend en outre :

la détermination de la valeur de compensation de vitesse de rotation pour un ajustement de synchronisation de phase du miroir rotatif sur la base d'une relation entre une valeur absolue de la valeur de compensation de vitesse de rotation estimée et un troisième seuil de différence de phase, comprenant :

(S431) lorsque la valeur absolue de la valeur de compensation de vitesse de rotation estimée est supérieure au troisième seuil de différence de phase, le réglage du troisième seuil de différence de phase comme valeur de compensation de vitesse de rotation pour un ajustement de synchronisation de phase du miroir rotatif ; et
(S432) lorsque la valeur absolue de la valeur de compensation de vitesse de rotation estimée est inférieure ou égale au troisième seuil de différence de phase, le réglage de la valeur de compensation de vitesse de rotation estimée comme valeur de compensation de vitesse de rotation pour un ajustement de synchronisation de phase du miroir rotatif.

11. Procédé de synchronisation de trame selon la revendication 9 ou la revendication 10, dans lequel la détermination d'une valeur de compensation de vitesse de rotation pour un ajustement de synchronisation de phase du miroir rotatif basée sur une différence de phase entre une phase du miroir rotatif lorsqu'il se déplace dans une même période que le signal de synchronisation de trame et une phase du signal de synchronisation de trame (S140), comprend en outre :
(S440) lorsque la valeur absolue de la différence de phase entre la phase du miroir rotatif lorsqu'il se déplace dans la même période que le signal de synchronisation de trame et la phase du signal de synchronisation de trame est inférieure ou égale au second seuil de différence de phase, le réglage de la valeur de compensation de vitesse de rotation pour un ajustement de synchronisation de phase du miroir rotatif à zéro, dans lequel le second seuil de différence de phase est égal à la valeur prédéfinie.

12. Appareil de synchronisation de trame (600) pour un système LiDAR, comprenant :

une première unité (610) configurée pour déterminer qu'il convient ou non de commander une vitesse de rotation du miroir rotatif pour la changer par une valeur d'ajustement, basée dynamiquement sur une différence de période entre une période du miroir rotatif générant un nuage de points avec un nombre prédéterminé de trames et une période d'un signal de synchronisation de trame, de telle sorte que la période du miroir rotatif générant le nuage de points avec le nombre prédéterminé de trames soit cohérente avec la période du signal de synchronisation de trame ;
une deuxième unité (620) configurée pour :
après que la période du miroir rotatif générant le nuage de points avec le nombre prédéterminé de trames est cohérente avec la période du signal de synchronisation de trame, déterminer une valeur de compensation de vitesse de rotation pour un ajustement de synchronisation de phase du miroir rotatif sur la base d'une différence de phase entre une phase du miroir rotatif lorsqu'il se déplace dans la même période que le signal de synchronisation de trame et une phase du signal de synchronisation de trame, de telle sorte que la différence de phase entre la phase du miroir rotatif lorsqu'il se déplace dans la même période que le signal de synchronisation de trame et la phase du signal de synchronisation de trame soit inférieure ou égale à une valeur prédéfinie ; et
une troisième unité (630) configurée pour :
après que la différence de phase entre la phase du miroir rotatif lorsqu'il se déplace dans la même période que le signal de synchronisation de trame et la phase du signal de synchronisation de trame est inférieure ou égale à la valeur prédéfinie, commander la vitesse de rotation du miroir rotatif pour l'ajuster à une vitesse de rotation utilisée lorsque la période du miroir rotatif générant le nuage de points avec le nombre prédéterminé de trames est cohérente avec la période du signal de synchronisation de trame **caractérisé en ce que** la troisième unité est configurée pour :

sur la base d'une période ajustée du miroir rotatif générant le nuage de points avec le nombre prédéterminé de trames et d'une phase ajustée du miroir rotatif lorsqu'il se déplace dans la même période que le signal de synchronisation de trame, régler une période de fonctionnement d'un miroir galvanométrique à une durée inférieure à une période du miroir rotatif générant une trame de nuage de points, et déclencher un mouvement initial du miroir galvanométrique à une position de phase où le miroir rotatif commence à générer une trame de nuage de points.

13. Dispositif informatique, comprenant :

au moins un processeur ; et
au moins une mémoire stockant un programme informatique,
dans lequel, une fois exécuté par l'au moins un processeur, le programme amène l'au moins un processeur à réaliser le procédé selon l'une quelconque des revendications 1 à 11.

14. Dispositif électronique, comprenant :

un système LiDAR ; et
un appareil de synchronisation de trame (600) selon la revendication 12 ou un dispositif informatique selon la revendication 13.

15. Support de stockage lisible par ordinateur, sur lequel est stocké un programme informatique, dans lequel, une fois exécuté par un processeur, le programme informatique amène le processeur à réaliser un procédé de synchronisation de trame selon l'une quelconque des revendications 1 à 11.

16. Système porteur, comprenant :

au moins un système LiDAR comme premier capteur ;
au moins un deuxième capteur ;
un générateur de signal de synchronisation de trame configuré pour générer un signal de synchronisation de trame qui synchronise l'au moins un système LiDAR et l'au moins un second capteur; et
un appareil de synchronisation de trame (600) selon la revendication 12 ou un dispositif informatique selon la revendication 13.

S120

Determine whether to control a rotation speed of a rotating mirror to change by an adjustment value, dynamically based on a period difference between a period of the rotating mirror generating a point cloud with a predetermined number of frames and a period of a frame synchronization signal, so that the period of the rotating mirror generating the point cloud with the predetermined number of frames is consistent with the period of the frame synchronization signal

S140

Determine a rotation speed compensation value for phase synchronization of the rotating mirror based on a phase difference between a phase of the rotating mirror when moving in a same period as the frame synchronization signal and a phase of the frame synchronization signal, so that the phase difference between the phase of the rotating mirror when moving in the same period as the frame synchronization signal and the phase of the frame synchronization signal is less than or equal to a preset value

S160

Control the rotation speed of the rotating mirror to be adjusted to a rotation speed used when the period of the rotating mirror generating the point cloud with the predetermined number of frames is consistent with the period of the frame synchronization signal

FIG. 1

**S120**

```
                            ⟨ Start ⟩
                                │
                                ▼
         ┌─────────────────────────────┐      ⌐S210
         │  Calculate a period Ts of a  │
         │  synchronization signal based│
         │  on an obtained frame        │
         │  synchronization signal      │
         └─────────────────────────────┘
                                │
                                ▼
         ┌─────────────────────────────┐
         │ Calculate a period Tp of a   │
         │ rotating mirror generating a │      ⌐S220
         │ point cloud with a           │
         │ predetermined number of      │
         │ frames, based on an obtained │
         │ rotation speed of the        │
         │ rotating mirror              │
         └─────────────────────────────┘
                                │
                                ▼
                        ⟨ Is an absolute ⟩          ┌──────────────────┐
                     value of a period      No      │ Determine that   │
                  ⟨ difference less than ⟩─────────▶ │ the frame        │  S250
                          a threshold              │ synchronization  │
                                │                   │ signal is an     │
                               Yes                  │ invalid signal   │
                                │                   └──────────────────┘
                                ▼
                        ⟨   Tp=Ts?   ⟩                  S240
```

No, and Tp>Ts       Yes       No, and Tp<Ts

┌────────────────────────────────────┐ ⌐S241
│ Determine to control a rotation    │
│ speed of the rotating mirror to    │
│ increase by an adjustment value,   │
│ and make a cumulative rotation     │
│ speed compensation value for       │
│ period synchronization adjustment  │
│ of the rotating mirror increased   │
│ by the adjustment value            │
└────────────────────────────────────┘

┌────────────────────────────────────┐ ⌐S242
│ Determine to control a rotation    │
│ speed of the rotating mirror to    │
│ decrease by an adjustment value,   │
│ and make a cumulative rotation     │
│ speed compensation value for       │
│ period synchronization adjustment  │
│ of the rotating mirror decreased   │
│ by the adjustment value            │
└────────────────────────────────────┘

┌──────────────────────────────┐
│ Determine to maintain a       │   ⌐S243
│ current rotation speed of the │
│ rotating mirror               │
└──────────────────────────────┘

FIG. 2

**S140**

```
                    ┌─────────────────────┐
                    Whether a phase
            difference is greater than or equal
                to a first phase difference
                        threshold
           Yes                              No
            │                                │
         S310                             S320
 ┌───────────────────────┐    ┌───────────────────────────┐
 │ Determine to control  │    │ Determine to control a    │
 │ a rotation speed of a │    │ rotation speed of a       │
 │ rotating mirror to    │    │ rotating mirror to        │
 │ increase by a first   │    │ increase or decrease by   │
 │ rotation speed        │    │ a second rotation speed   │
 │ compensation value    │    │ compensation value        │
 └───────────────────────┘    └───────────────────────────┘
```

Determine to control a rotation speed of a rotating mirror to increase by a first rotation speed compensation value

Determine to control a rotation speed of a rotating mirror to increase or decrease by a second rotation speed compensation value

S321

Is a phase of the rotating mirror when moving in a same period as a frame synchronization signal less than a phase of the frame synchronization signal

No

Yes

S323

Determine to control the rotation speed of the rotating mirror to decrease by the second rotation speed compensation value

S322

Determine to control the rotation speed of the rotating mirror to increase by the second rotation speed compensation value

FIG. 3

**S140**

S410

Calculate a phase difference between a phase of a rotating mirror when moving in a same period as a frame synchronization signal and a phase of the frame synchronization signal based on an obtained frame synchronization signal and a synchronization point signal of the rotating mirror

Is an absolute value of the phase difference greater than a second phase difference threshold — No

Yes

S420

Determine an estimated rotation speed compensation value for phase synchronization adjustment of the rotating mirror

S440

Determine to maintain a phase of the synchronization point signal of the rotating mirror

Is the estimated rotation speed compensation value greater than a third phase difference threshold — No

Yes

S431

Set the third phase difference threshold as a rotation speed compensation value for phase synchronization adjustment of the rotating mirror

S432

Set the estimated rotation speed compensation value as a rotation speed compensation value for phase synchronization adjustment of the rotating mirror

FIG. 4

S120

Determine whether to control a rotation speed of a rotating mirror to change by an adjustment value, dynamically based on a period difference between a period of the rotating mirror generating a point cloud with a predetermined number of frames and a period of a frame synchronization signal, so that the period of the rotating mirror generating the point cloud with the predetermined number of frames is consistent with the period of the frame synchronization signal

S140

Determine a rotation speed compensation value for phase synchronization of the rotating mirror based on a phase difference between a phase of the rotating mirror when moving in a same period as the frame synchronization signal and a phase of the frame synchronization signal, so that the phase difference between the phase of the rotating mirror when moving in the same period as the frame synchronization signal and the phase of the frame synchronization signal is less than or equal to a preset value

S160

Control the rotation speed of the rotating mirror to be adjusted to a rotation speed used when the period of the rotating mirror generating the point cloud with the predetermined number of frames is consistent with the period of the frame synchronization signal

S580

Set an operation period of a galvanometer mirror to be less than the period of the rotating mirror generating the point cloud with the predetermined number of frames and trigger initial movement of the galvanometer mirror at a phase position where the rotating mirror starts to generate one frame of point cloud

FIG. 5

<u>600</u>

```
┌─────────────────┐
│   First unit    │
│      610        │
└─────────────────┘

┌─────────────────┐
│   Second unit   │
│      620        │
└─────────────────┘

┌─────────────────┐
│   Third unit    │
│      630        │
└─────────────────┘
```

FIG. 6

FIG. 7

710A 700 710D

710B

712A

712D

Centralized
laser delivery
system
701

712F

710F

712B

712C

712E

710C

710E

EP 4 339 638 B1

31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210405360 A
- US 20220260828 A
- US 20210394781 A